# EUROPEAN PATENT SPECIFICATION

(11) **EP 2 348 621 B1**
(45) Date of publication and mention of the grant of the patent: **22.02.2017**
(21) Application number: 09822074.2
(22) Date of filing: 22.10.2009
(51) Int. Cl.: H02K 33/18, H02K 33/16

(54) **LINEAR ACTUATOR**
LINEARER AKTUATOR
ACTIONNEUR LINÉAIRE

(30) Priority: 22.10.2008 JP 2008272335; 24.03.2009 JP 2009071553; 28.05.2009 JP 2009129065
(43) Date of publication of application: 27.07.2011
(73) Proprietor: Sinfonia Technology Co., Ltd., Tokyo 105-8564 (JP)
(72) Inventor: NAKAGAWA, Hiroshi, Ise-shi Mie 516-8550 (JP); FUJII, Takayoshi, Ise-shi Mie 516-8550 (JP); FUKUNAGA, Takashi, Ise-shi Mie 516-8550 (JP); ONOUE, Takashi, Ise-shi Mie 516-8550 (JP)
(74) Representative: Isarpatent
(86) International application number: PCT/JP2009/068213
(87) International publication number: WO 2010/047377

(56) References cited:
- EP-A1- 1 571 482
- WO-A2-2008/116857
- JP-A- S5 921 271
- JP-A- 11 303 736
- JP-A- 11 313 476
- JP-A- 2004 343 964
- JP-A- 2004 353 538
- JP-A- 2006 050 885
- JP-A- 2006 101 650
- JP-A- 2006 194 181
- JP-A- 2007 135 351

## Description

### Technical Field

The present invention relates to a linear actuator.

### Background Art

There has hitherto been proposed a linear actuator shown in Patent Document 1 set forth below. In this linear actuator, an inner core as a component part of a stator has a permanent magnet disposed at an outside surface thereof. In addition, an outer core as a component part of a movable element has a magnetic pole section formed by projecting a portion thereof to the inner side. The magnetic pole section and the permanent magnet are disposed opposite to each other through a gap therebetween having a predetermined width in the radial direction.

Furthermore, the linear actuator has a leaf spring by which a shaft as a component part of the stator is supported coaxially and concentrically with the outer core and by which the outer core is elastically supported so that it can be reciprocated in a thrust direction relative to the shaft.

In the linear actuator shown in Patent Document 1, it is unnecessary to support the shaft by a thrust bearing or the like, so that it is possible to reduce the mechanical loss due to friction between the shaft and the thrust bearing. In the case where a leaf spring with low rigidity is used for the purpose of enlarging the movable range of the movable element, however, rigidity in the radial direction of the movable element is reduced. Therefore, there has been a problem that when a force in a direction different from the reciprocating direction of the movable element is exerted on the linear actuator from, for example, other apparatus in which a linear actuator is disposed, the movable element is displaced in the radial direction and the magnetic pole section of the movable element may collide against the permanent magnet of the stator, thereby breaking the permanent magnet. In addition, there has also been a problem that when the movable element is repeatedly displaced in the radial direction, the leaf spring may be broken due to fatigue of metal.

Incidentally, since the spacing between the magnetic pole section and the permanent magnet is generally small (for example, 1 mm or less), it is difficult to insert a cushioning material such as a rubber sheet between them. Besides, even where a rubber sheet or the like can be inserted therebetween, the rubber sheet or the like must be adhered to the magnetic pole section or the permanent magnet, leading to the problem of increases in material cost and assembly cost.

In addition, there have hitherto been known a variety of linear actuators in which a stationary section and a movable section are disposed on the same axis and the movable section can be reciprocated in a thrust direction relative to the stationary section. Linear actuators of the type in which the movable section is disposed relatively on the outer side are called outer movable type linear actuators, and those of the type in which the movable section is disposed relatively on the inner side are called inner movable type linear actuators. In general, in a linear actuator, that one of the stationary section and the movable section which is provided with a coil for generating a magnetic flux for reciprocating the movable section is provided with a permanent magnet, and a magnetic pole surface is provided at that surface of the other which faces the permanent magnet through a predetermined gap therebetween.

In either of the linear actuators of the outer movable type and the inner movable type, in general, the permanent magnet is a bowlike (arched) one processed into a circular arc shape with the shaft as a center of the circle, and the magnetic pole surface facing the bowlike permanent magnet through a predetermined gap therebetween is also formed in a circular arc shape with the shaft as a center of the circle which shape is obtained by parallel displacement of the bowlike shape of the permanent magnet along the radial direction (see, for example, Japanese Patent Application No. 2009-071553 for the outer movable type linear actuator, and see, for example, Patent Document 2 for the inner movable type linear actuator). One of the reasons for adoption of such a configuration is to prevent the permanent magnet and the magnetic pole surface from colliding against each other when the bearing is inclined, in view of the fact that the bearing can be inclined (shifted) around the axis of the shaft, since a substantially cylindrical shaft excellent in machinability and assembleability is adopted.

However, a bowlike permanent magnet is high in machining cost because it must be machined with high accuracy. In addition, as compared with a simple flat plate-like permanent magnet, the bowlike permanent magnet is greater in the amount of magnet material used for production thereof and the amount of waste generated upon machining thereof, leading to an increase in cost. To begin with, a linear actuator is a device having a comparatively small number of component parts, and the cost of the permanent magnet accounts for a high proportion of the total cost of the linear actuator. Therefore, a reduction in the cost of the permanent magnet contributes greatly to a reduction in the total cost of the linear actuator.

Recently, in automotive industry, such improvements as lightening of vehicle body, achievement of lower engine rotating speeds or stop of cylinder operations during idling, etc. have been under way, as countermeasures against environmental problems. Each of these countermeasures, however, can increase vibrations of the vehicle body, thereby lowering the ride comfort. In view of this, investigations have been made concerning the active mass damper (vibration-damping mechanism) in which a weight disposed at an appropriate position in a vehicle body is actively moved by a linear actuator so as to control the vehicle body vibrations through utilization of a reaction force of the weight. In the automotive industry, there is a particularly keen demand for a reduction in the cost of the linear actuator itself, in adopting such a vibration-damping mechanism.

Furthermore, there has also been proposed a linear actuator shown in Patent Document 3 set forth below. In this linear actuator, a permanent magnet is disposed at the tip of a bulged portion of an inner surface of an outer core used as a component part of a stator, and a coil is wound around the bulged portion. In addition, an inner core as a component part of a movable element has a magnetic pole section. The magnetic pole section and the permanent magnet are disposed opposite to each other, with a predetermined gap therebetween, in the radial direction.

The linear actuator further has a pair of leaf springs by which a shaft as a component part of the movable element is supported coaxially and concentrically with an outer core and by which a shaft is elastically supported so that it can be reciprocated in a thrust direction relative to the outer core.

The leaf springs are formed in the shape of numeral "8" as viewed in the axial direction of the shaft. In addition, a shaft passing hole is formed at the intersection in the "8" shape. Besides, the upper and lower aperture sections (annular sections) of the "8" shape are so sized that a coil can be passed through the inside thereof. Further, one end part and the other end part of the leaf spring are provided, on the center line in the vertical direction, with small round holes for attaching the stator.

The above-mentioned linear actuator according to the related art, however, has the following problem. When the shaft in the state of penetrating the center of the inner core is located in the inside of the outer core in assembling the linear actuator, a magnetic pole section of the movable element would be magnetically attracted onto the permanent magnet provided in the stator, thereby collapsing the above-mentioned predetermined gap, namely, the gap to be left between the magnetic pole section and the permanent magnet disposed opposite to each other. At the time of the collapse of the gap, the permanent magnet may be damaged.

Besides, in this condition (the condition where the stator and the movable element are not coaxial with each other), there is a positional misalignment between the round hole in the leaf spring and the penetration hole provided in the outer core correspondingly to the round hole. Therefore, it is difficult to insert a bolt for fastening the outer core and the leaf spring to each other. Accordingly, it is difficult to attach the leaf spring to the outer core.

### Prior Art Document

### Patent Document

Patent Document 1: Japanese Patent Laid-open No. 2007-135351
Patent Document 2: Japanese Patent Laid-open No. 2004-343964
Patent Document 3: Japanese Patent Laid-open No. 2006-220196

Further, in EP 1 571 482 A1 a device is disclose for reducing deterioration of image quality which can get rid of speckle by equalizing laser from a light source on a screen by vibrating a reflective mirror installed between the light source and the screen at a predetermined amplitude

Furthermore, in JP 2007 135351 A an outer movable linear actuator is disclosed which comprises a stator having an inner core, a permanent magnet arranged on the outside thereof, a coil wound around the inner core, a moving member arranged around the stator and having an outer core and a leaf spring. Further, the stator has a permanent magnet securing mechanism.

### Summary of Invention

### Technical Problem

In consideration of the above-mentioned problem, the present invention has been made for the purpose of providing a linear actuator in which a permanent magnet can be reliably prevented from being damaged.

It is a first object of the present invention to provide a linear actuator in which a magnet and a leaf spring can be securely prevented from being damaged, without needing any other cushioning material or the like.

It is a second object of the present invention to provide a linear actuator in which a reduction in cost can be contrived while preventing a permanent magnet from being damaged, based on a novel technical thought that no bowlike permanent magnet is used.

It is a third object of the present invention to provide a linear actuator which ensures that even in the case where a magnetic pole section is magnetically attracted onto a permanent magnet at the time of attaching a leaf spring during an assembling operation and where a stator and a movable element are in the state of being not coaxial with each other, it is easy to correct the state and render the stator and the movable element coaxial with each other while preventing the permanent magnet from being damaged.

### Technical Solution

According to the present invention, there is provided a linear actuator including a stator and a movable element which are disposed on radially inner and outer sides, a permanent magnet provided in one of the stator and the movable element, a magnetic pole section which is provided in the other of the stator and the movable element and is disposed opposite to the permanent magnet in a radial direction through a predetermined gap therebetween, and a leaf spring which supports the stator and the movable element so as to cause them to have the same axis and which elastically supports the movable element so that the movable element can be reciprocated relative to the stator in an axial direction, characterized in that the linear actuator includes a first contact section provided in one of the stator and the movable element, and a second contact section which is provided in the other of the stator and the movable element and which is provided at such a position as to be able to make contact with the first contact section in the radial direction or in a rotating direction about the axis, and the width of a gap between the first contact section and the second contact section in the radial direction or the width of a gap between the first contact section and the second contact section in the rotating direction is smaller than the width of the gap between the permanent magnet and the magnetic pole section.

In the configuration as above, when a force in a direction different from the reciprocating direction of the movable element is exerted on the linear actuator from other apparatus in which a linear actuator is disposed, the permanent magnet and the magnetic pole section are displaced closer to each other so that the first contact section and the second contact section approach mutually. In the above configuration, besides, the width of the gap between the first contact section and the second contact section in the radial direction or the width of the gap between the contact sections in the rotating direction is set to be smaller than the width of the gap between the permanent magnet and the magnetic pole section. Therefore, the first contact section and the second contact section make contact with each other before the permanent magnet and the magnetic pole section make contact with each other (by the time when the permanent magnet and the magnetic pole section make contact with each other). When the first contact section and the second contact section have thus made contact with each other, the permanent magnet and the magnetic pole section are restrained from coming further closer to each other and, therefore, do not make contact with each other. Accordingly, the magnetic pole section is effectively prevented from coming into contact with the permanent magnet to damage the permanent magnet.

In addition, when a force in a direction different from the reciprocating direction of the movable element is repeatedly exerted on the linear actuator, the leaf spring is repeatedly displaced in that direction. In the above-mentioned configuration, however, the width of the gap between the first contact section and the second contact section in the radial direction or the width of the gap between the contact sections in the rotating direction is set to be smaller than the width of the gap between the permanent magnet and the magnetic pole section. Therefore, the displacing amount of the leaf spring in the radial direction is restricted to the width of the gap between the first contact section and the second contact section in the radial direction or the width of the gap between the contact sections in the rotating direction. With the displacing amount of the leaf spring thus restricted, there is obtained an effect that the leaf spring can be prevented from being broken due to repeated fatigue (in this case, particularly, fatigue of metal).

In addition, the first contact section and the second contact section may each be provided by utilizing a part of a material constituting a magnetic circuit. Or, alternatively, the contact sections may be component parts which are provided in the stator and the movable element for exclusive use for preventing the permanent magnet and the leaf spring from being broken.

In the configuration in which a part of the material constituting the magnetic circuit is utilized as each of the contact sections, the contact section can be easily formed as one body with the stator or the movable element. According to the configuration in which each of the contact sections is formed as one body with the stator or the movable element, there is obtained an effect that the permanent magnet and the leaf spring can be prevented from being damaged, while suppressing increases in parts cost and assembly cost.

As the gap between the first contact section and the second contact section, there may be considered a gap which has a width in the radial direction or a gap which has a width in the rotating direction. The width of the gap in the radial direction and the width of the gap in the rotating direction may be equal or different in magnitude.

Especially, a configuration in which the width of the gap between the first contact section and the second contact section in the rotating direction is set smaller than the width of the gap between the permanent magnet and the magnetic pole section is suited to the case in which the permanent magnet and the magnetic pole section are disposed opposite to each other on a plane.

A linear actuator according to the present invention is characterized in that the first contact section is provided at at least a portion thereof with at least a first projection projecting toward the second contact section, and the second contact section is provided at at least a portion thereof with at least one second projection projecting toward the first contact section.

In the configuration as above, the mutual contact of the first projection and the second projection in the radial direction or in the rotating direction restrains the permanent magnet and the magnetic pole section from coming further closer to each other, so that the permanent magnet is prevented from being broken due to contact of the magnetic pole section with the permanent magnet. In addition, since the displacing amount of the leaf spring in the radial direction is suppressed, there is obtained an effect that the leaf spring can be prevented from being broken due to repeated fatigue.

A linear actuator according to the present invention is characterized in that the first contact section is provided at at least a portion thereof with at least one projection projecting toward the second contact section, and the second contact section is provided at at least a portion thereof with at least one recess capable of containing the first contact section.

The containing means that the projection faces the recess in the radial direction or the rotating direction, through a gap having a width in the radial direction or a gap having a width in the rotating direction therebetween. In this configuration, besides, in the condition where the projection is contained in the recess, the projection and the recess can make contact with each other in the radial direction or the rotating direction.

In the configuration as above, when a force in a direction different from the reciprocating direction of the movable element is exerted on the linear actuator from other apparatus in which a linear actuator is disposed in the condition where the projection is contained in the recess, the projection and the recess come closer to each other in the radial direction or the rotating direction. Then, the projection and the recess come into contact with each other in the radial direction or the rotating direction, whereby the permanent magnet and the magnetic pole section are restrained from coming further closer to each other, so that the permanent magnet is prevented from being broken due to contact of the magnetic pole section with the permanent magnet. In addition, since the displacing amount of the leaf spring in the radial direction is suppressed, there is obtained an effect that the leaf spring can be prevented from being broken due to repeated fatigue.

A linear actuator according to the present invention is characterized in that the first contact section is a shaft passed through that one of the stator and the movable element which is disposed on the radially inner side, with the axis as a common axis, the second contact section is a flange provided in that other of the stator and the movable element which is disposed on the radially outer side, the flange having a hole through which an end side of the shaft is passed, and the width of a radial gap between the first contact section and the second contact section is smaller than the width of the gap between the permanent magnet and the magnetic pole section.

In the configuration as above, when a force in a direction different from the reciprocating direction of the movable element is exerted on the linear actuator from other apparatus in which a linear actuator is disposed, the permanent magnet and the magnetic pole section are, and also an outer peripheral surface of the shaft and a peripheral surface of the hole in the flange are, displaced so as to come closer to each other. Since the radial gap between the outer peripheral surface of the shaft and the peripheral surface of the hole in the flange has a width in the radial direction which is smaller than the width of the gap between the permanent magnet and the magnetic pole section, the contact of the outer peripheral surface of the shaft and the peripheral surface of the hole in the flange prevents the permanent magnet and the magnetic pole section from coming further closer to each other and, hence, from making contact with each other. Therefore, there is obtained an effect that the permanent magnet can be prevented from being broken due to contact between the permanent magnet and the magnetic pole section.

In addition, the displacing amount of the leaf spring in the radial direction is restricted to the width of the gap in the radial direction between the outer peripheral surface of the shaft and the peripheral surface of the hole in the flange. With the displacing amount of the leaf spring thus suppressed, there is obtained an effect that the leaf spring can be prevented from being broken due to repeated fatigue.

Besides, a linear actuator according to another embodiment includes a stationary section and a movable section capable of being reciprocated relative to the stationary section which are disposed on the same axis, a shaft serving as the axis, and a bearing which is interposed between the stationary section and the movable section, supports the shaft in a non-rotatable manner and is movable in a thrust direction in the state of restraining movement of the stationary section and the movable section in a plane orthogonal to the axial direction of the shaft, characterized in that that one of the stationary section and the movable section which is provided with a coil for generating a magnetic flux for reciprocating the movable section is provided with a flat plate-like permanent magnet, and that surface of the other which faces the permanent magnet and functions as a magnetic pole surface is formed flat.

In the linear actuator thus configured, the use of the flat plate-like permanent magnet ensures that a high machining accuracy is not demanded, machining cost can be suppressed, the amount of magnet material to be used is reduced, the amount of waste generated upon machining is reduced, and a reduction in cost can be contrived effectively, as compared with a bowlike permanent magnet. In addition, the cost of the permanent magnet itself can be reduced, whereby a reduction in the total cost of the actuator can also be contrived. Besides, since the linear actuator of the present invention is so configured that the shaft and the bearing are not rotatable relative to each other, the bearing would not be inclined (vibrated) around the axis of the shaft. In addition, since the bearing restrains movement of the stationary section and the movable section in the plane orthogonal to the axis of the shaft, the stationary section and the movable section would also not be inclined (vibrated) around the axis of the shaft. As a result, the magnetic pole surface facing the flat plate-like permanent magnet can be formed flat, so that there is no need for a high machining accuracy or a high assembly accuracy, and a parallel constant gap can be easily secured between the permanent magnet and the magnetic pole surface, while preventing the flat plate-like permanent magnet from being damaged. Incidentally, the shaft is a component part belonging to the stationary section in the case of an outer movable type linear actuator, whereas the shaft is a component part belonging to the movable section in the case of an inner movable type linear actuator.

In the linear actuator according to another embodiment in order to make the bearing and the shaft non-rotatable relative to each other, a configuration suffices in which the outer shape of the shaft and the aperture shape of that shaft passing hole of the bearing through which the shaft can be passed are polygonal shapes corresponding to each other. Here, "the outer shape of the shaft" means the shape of the outer edge of a section (cross-section) orthogonal to the axial direction of the shaft. Besides, "the polygonal shapes" include shapes (roughly polygonal shapes) with vertexes rounded by grinding, for example.

Particularly, where the outer shape of the shaft and the aperture shape of the shaft passing hole are tetragonal shapes corresponding to each other, excellent machinability and ease of assembly are secured, which naturally is preferable. Incidentally, "the tetragonal shapes" include shapes (roughly tetragonal shapes) with vertexes (four corners) rounded.

In addition, the linear actuator according to this embodiment is applicable to outer movable type linear actuators in which a movable section is disposed on the outer side of a stationary section and to inner movable type linear actuators in which a movable section is disposed on the inner side of a stationary section.

Furthermore, there is provided a linear actuator including a stator and a movable element disposed on radially inner and outer sides, and a leaf spring which supports the stator and the movable element so as to cause them to have the same axis and elastically support the movable element so that the movable element can be reciprocated relative to the stator in a thrust direction, one of the stator and the movable element being provided with a permanent magnet, and the other of the stator and the movable element being provided with a magnetic pole section facing the permanent magnet in the radial direction with a gap therebetween, characterized in that in order to positioningly attach the leaf spring to the stator or the movable element that is disposed on the radially outer side, the stator or the movable element is provided with at least one pair of engaging projections, whereas the leaf spring is provided with at least one pair of engaging cutouts in which the engaging projections are to be engaged respectively, and wherein each of the engaging projections and the engaging cutouts is disposed in a direction in which a magnetic force of the permanent magnet acts on the magnetic pole section, and at least a portion of the engaging cutout is notched in the direction in which the magnetic force of the permanent magnet acts on the magnetic pole section.

At the time of attaching a leaf spring in assembling a linear actuator, ordinarily, onto the permanent magnet in one of a stator and a movable element is magnetically attracted the other of the stator and the movable element, resulting in a condition in which the stator and the movable element are not coaxial with each other. This means that a positional misalignment is generated between the engaging projections in the stator or the movable element that is disposed on the radially outer side and the engaging cutouts in the leaf spring. Since each of the engaging cutouts is notched at least partly, it is ensured, notwithstanding the positional misalignment, that the leaf spring can be tentatively attached without damaging the permanent magnet when the positional misalignment is corrected by engaging the engaging projections into the corresponding engaging cutouts. In addition, when the engaging projections are engaged into the engaging cutouts, the magnetic attraction between the stator and the movable element is forcibly released by the elasticity of the leaf spring, so that the stator and the movable element are corrected to be coaxial with each other.

Besides, in the linear actuator according to this embodiment the leaf spring may have a frame section attached to the stator or the movable element that is disposed on the radially outer side, and a flexible section provided on the inner side of the frame section, and the frame section may be provided with at least one pair of engaging cutouts.

According to such a configuration, since the leaf spring is bisected into the section attached to the stator or the movable element that is disposed on the radially outer side and the section permitting the movable element to be reciprocated smoothly, the attachment rigidity of the leaf spring can be enhanced and, further, the correction is thereby facilitated.

Furthermore, according to this embodiment it is possible to select a configuration in which the engaging cutouts are formed in a U shape.

According to such a configuration, since the engaging cutouts are formed in a U shape, engagement of the above-mentioned engaging projections into the engaging cutouts is facilitated, whereby working efficiency in the assembling operation can be further enhanced.

### Advantageous Effects

According to the present invention, a linear actuator can be provided in which a permanent magnet can be reliably prevented from being damaged.

In the first linear actuator, the width of the gap, in the radial direction or the rotating direction, between the contact sections provided in the stator and the movable element is set to be smaller than the width of the gap between the permanent magnet and the magnetic pole section. This configuration has an effect that the permanent magnet can be prevented from being broken, by preventing the permanent magnet and the magnetic pole section from making contact with each other, without using a cushioning material or the like for preventing the permanent magnet from being broken.

In addition, where the width of the gap, in the radial direction or the rotating direction, between the contact sections provided in the stator and the movable element is set in such a range that the leaf spring would not be broken due to repeated vibration, there is obtained an effect that the leaf spring can be prevented from being broken or undergoing plastic deformation.

In a further embodiment of the linear actuator, a reduction in cost can be effectively contrived while preventing the permanent magnet from being damaged, based on a novel technical thought that a flat plate-like permanent magnet is used in place of a bowlike permanent magnet.

In a further embodiment of the linear actuator, the leaf spring is formed with the engaging cutouts being notched in the direction in which the magnetic force of the permanent magnet acts on the magnetic pole section. This ensures that, even in the case where the permanent magnet in one of the stator and the movable element is magnetically attracted to the other of the stator and the movable element at the time of attaching the leaf spring in the assembling operation and where the stator and the movable element are not coaxial with each other and a positional misalignment is generated between the engaging projections and the engaging cutouts, the leaf spring can be easily attached while preventing the permanent magnet from being damaged. Besides, in this instance, the magnetic attraction is forcibly released by the rigidity or elastic force of the leaf spring in the radial direction, and the stator and the movable element are corrected to be coaxial with each other, so that working efficiency in the assembling operation can be enhanced.

### Brief Description of Drawings

[FIG. 1]

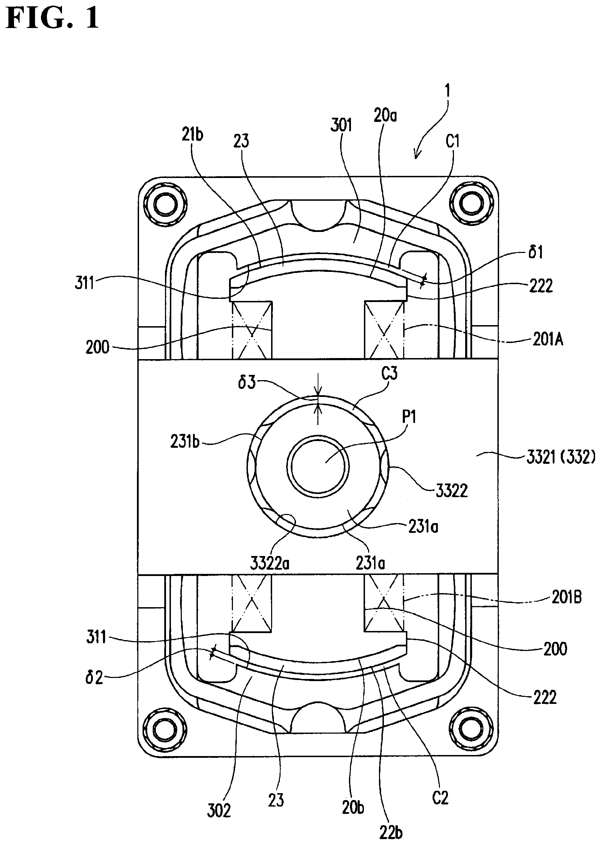

   FIG. 1 is a singular front view of a linear actuator showing an embodiment of the present invention.
[FIG. 2]

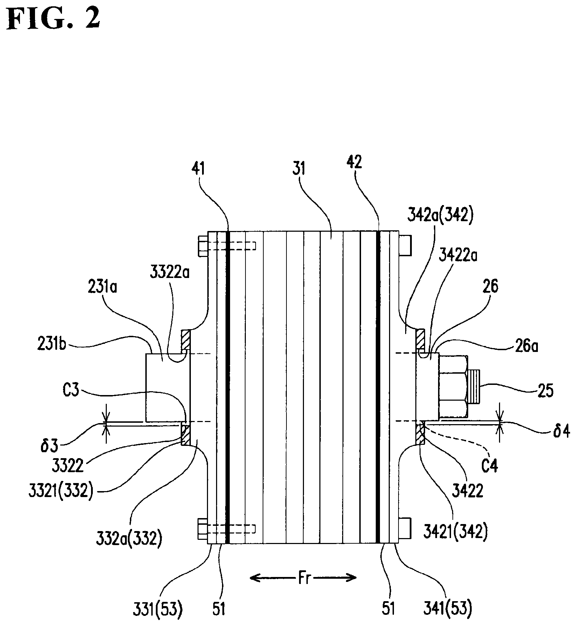

   FIG. 2 is a side view of the same.
[FIG. 3]

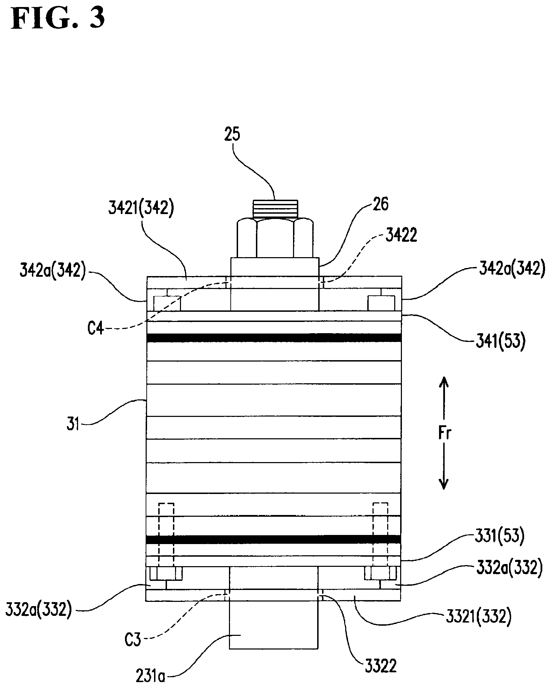

   FIG. 3 is a plan view of the same.
[FIG. 4]

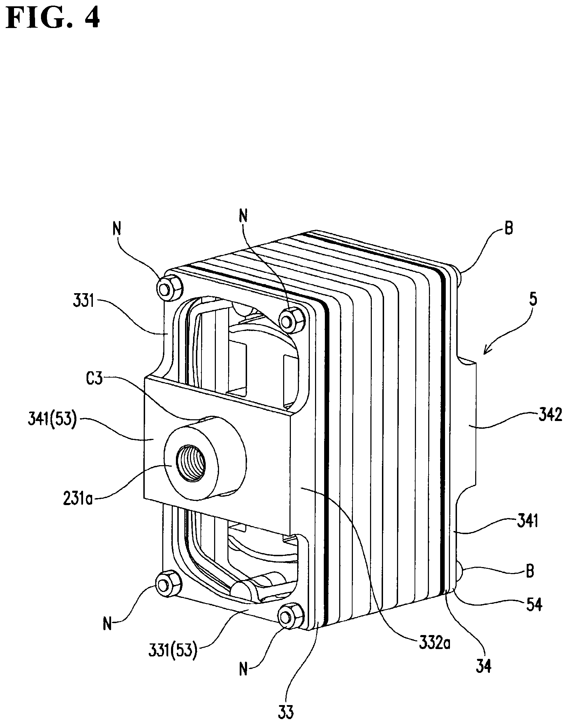

   FIG. 4 is a general perspective view of the same.
[FIG. 5]

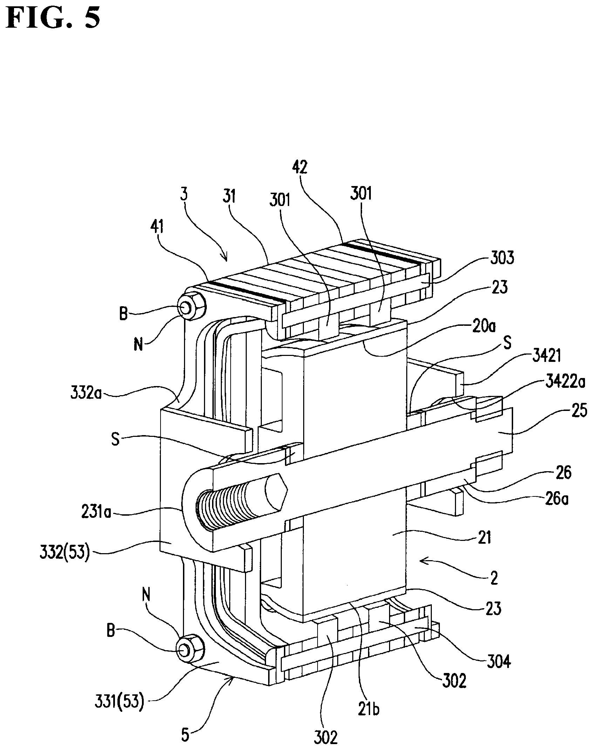

   FIG. 5 is a longitudinal sectional perspective view of the same.
[FIG. 6]

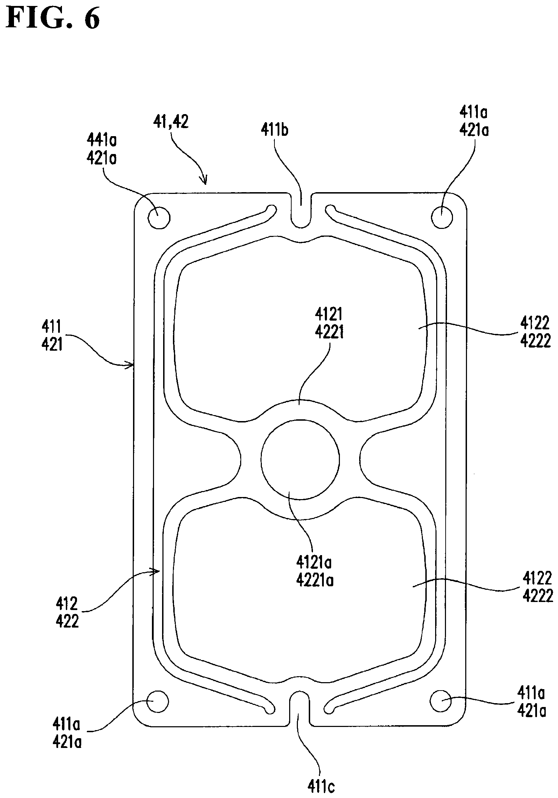

   FIG. 6 is a front view of a leaf spring of the same.
[FIG. 7]

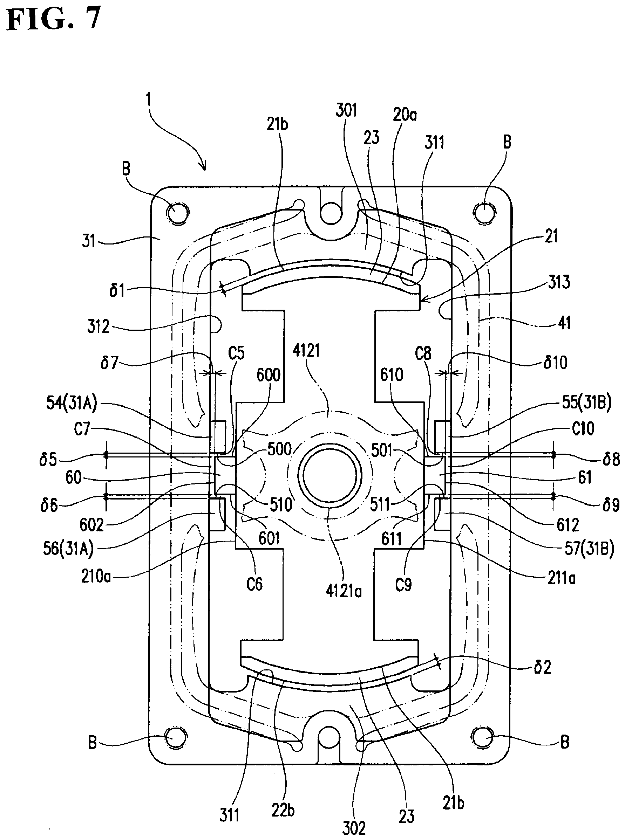

   FIG. 7 is a singular front view of a linear actuator showing another embodiment of the present invention.
[FIG. 8]

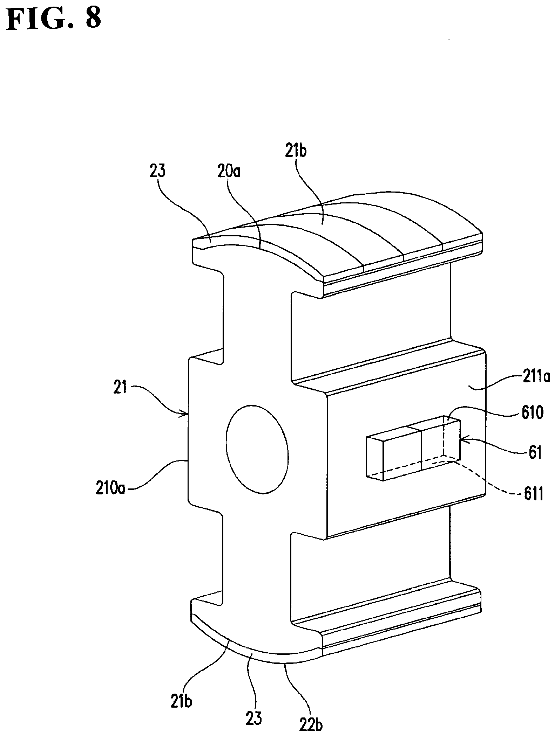

   FIG. 8 is a perspective view showing a part of a stator of the same.
[FIG. 9]

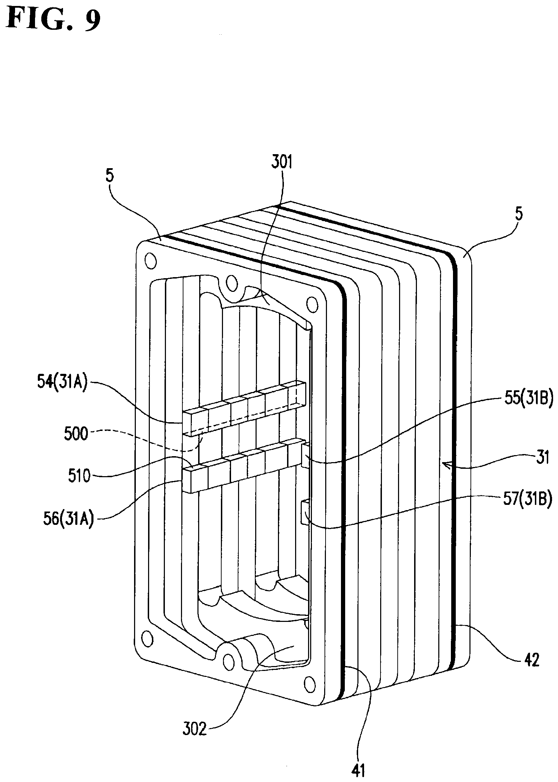

   FIG. 9 is a singular perspective view of a movable element of the same.
[FIG. 10]

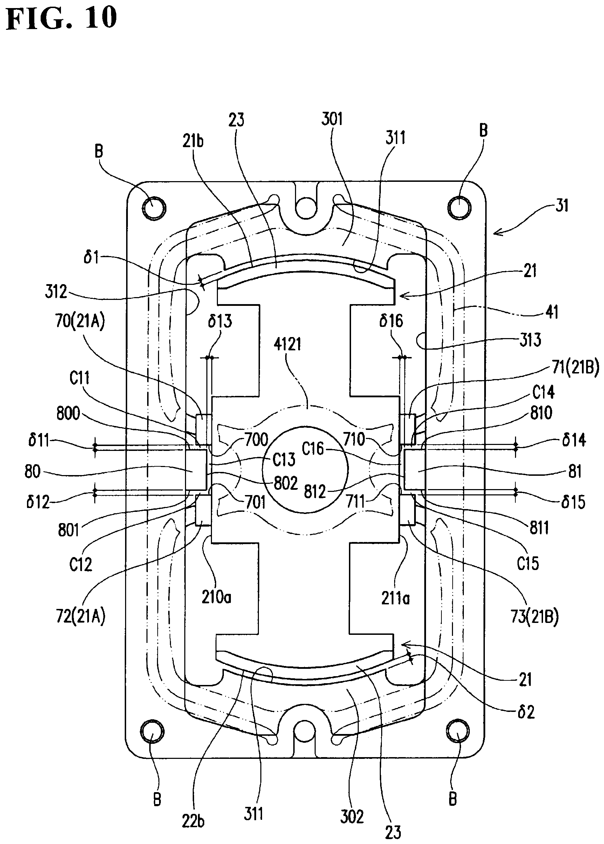

   FIG. 10 is a front view of a linear actuator showing a further embodiment of the present invention.
[FIG. 11]

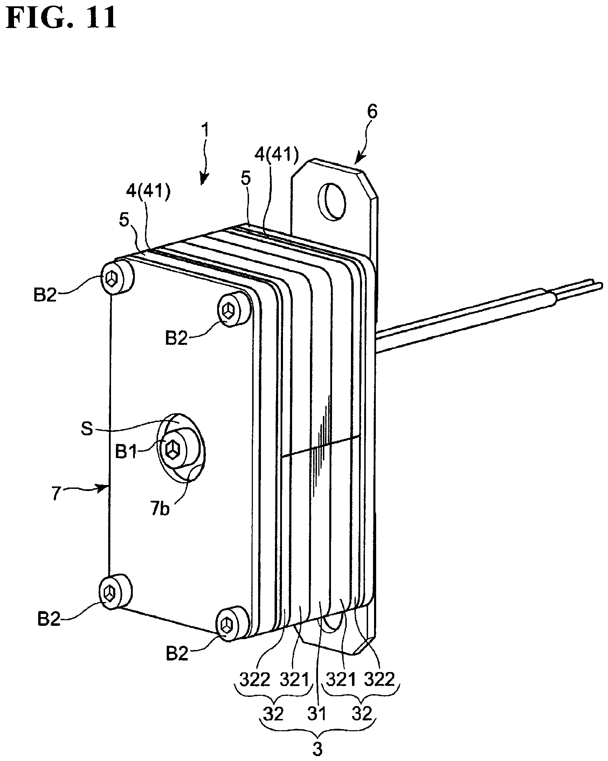

   FIG. 11 is a general perspective view of a linear actuator according to yet another embodiment of the present invention.
[FIG. 12]

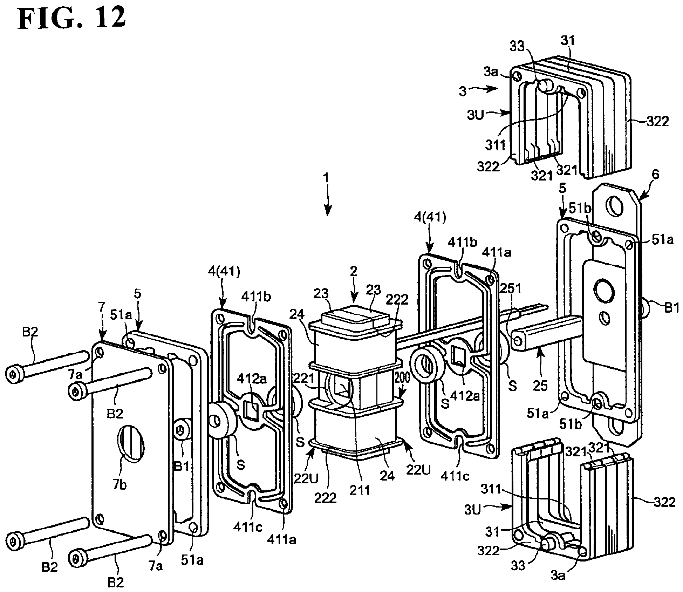

   FIG. 12 is an exploded perspective view of the linear actuator according to the yet another embodiment.
[FIG. 13]

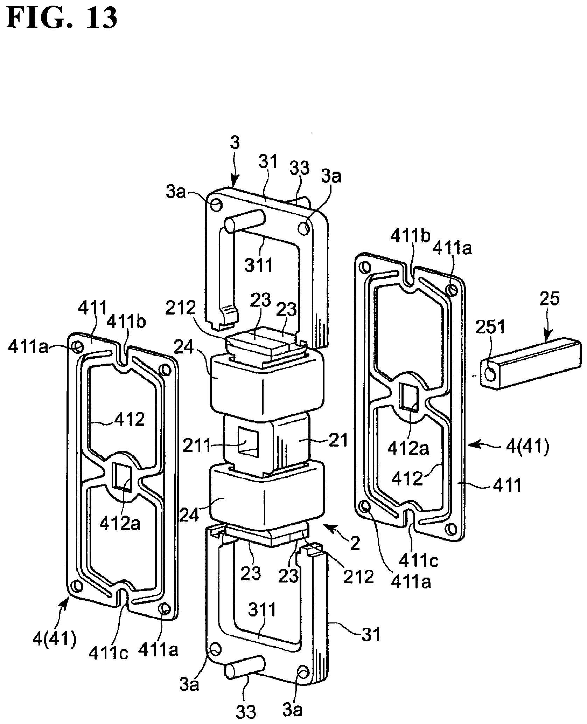

   FIG. 13 is an exploded perspective view of a major part of the linear actuator according to the yet another embodiment.
[FIG. 14]

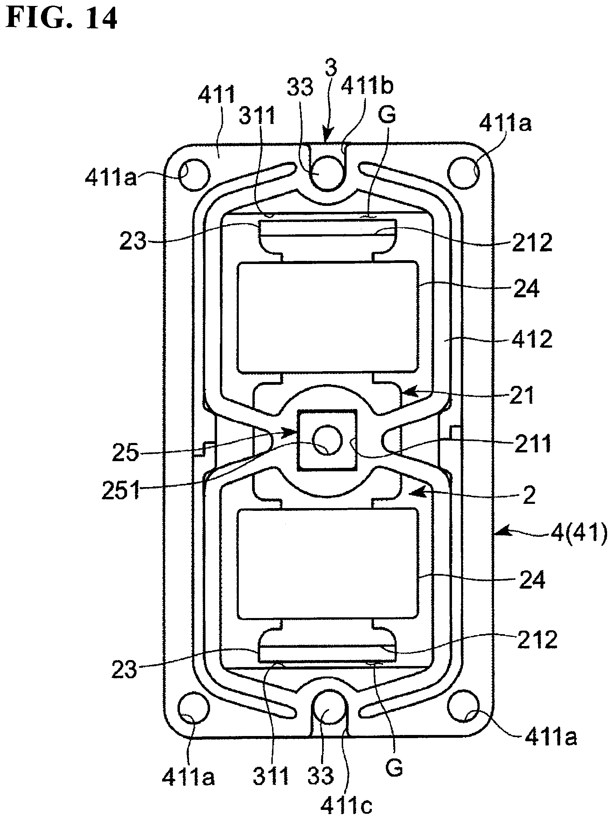

   FIG. 14 is a front view of a major part of the linear actuator according to the yet another embodiment.
[FIG. 15]

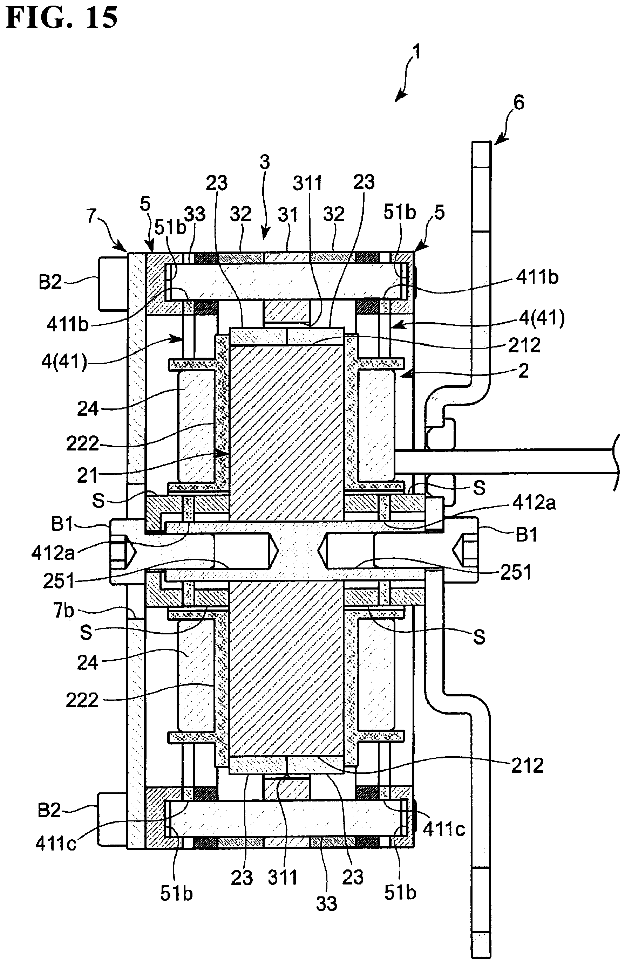

   FIG. 15 is a schematic sectional view of the linear actuator according to the yet another embodiment.
[FIG. 16]

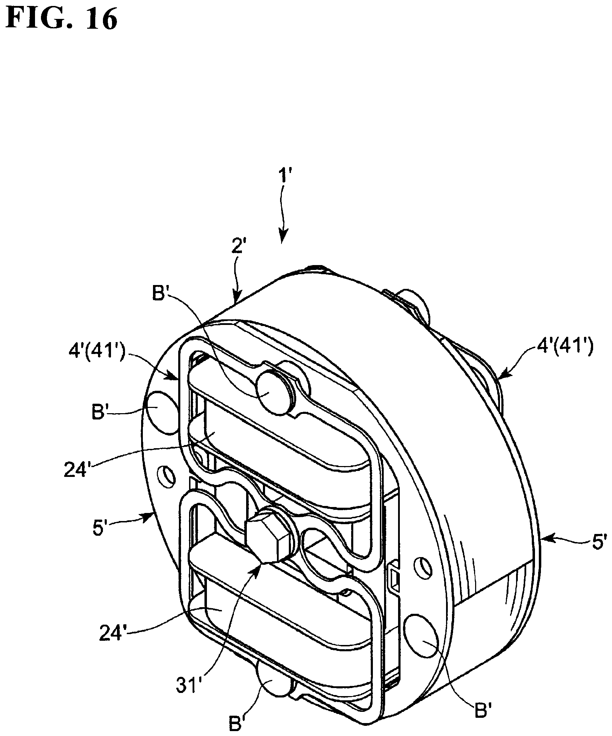

   FIG. 16 is a general perspective view of a linear actuator according to a yet further embodiment of the present invention.
[FIG. 17]

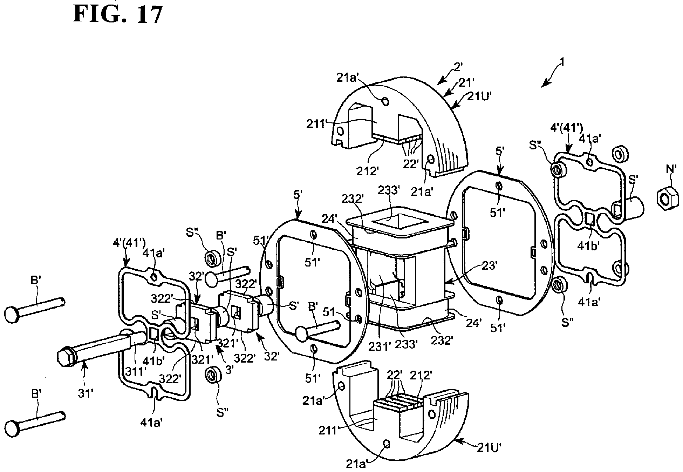

   FIG. 17 is an exploded perspective view of the linear actuator according to the yet further embodiment.
[FIG. 18]

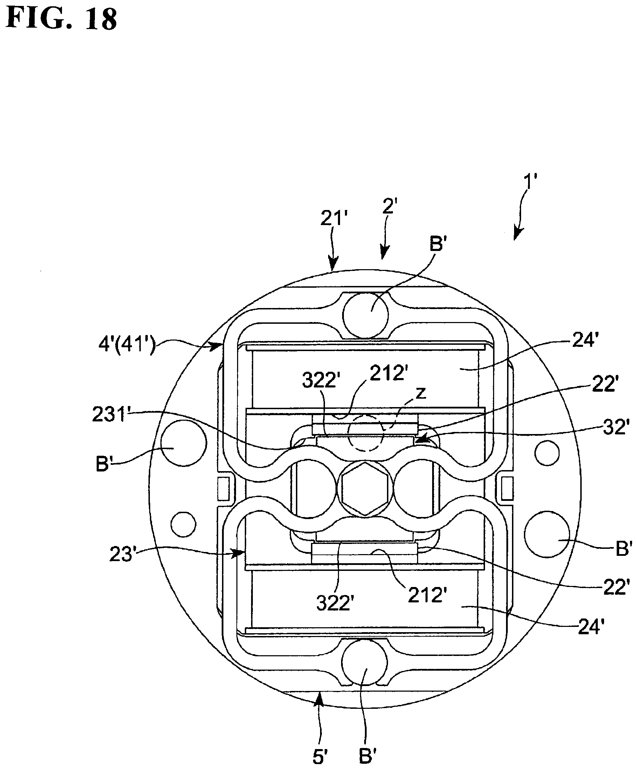

   FIG. 18 is a front view of the linear actuator according to the yet further embodiment.
[FIG. 19]

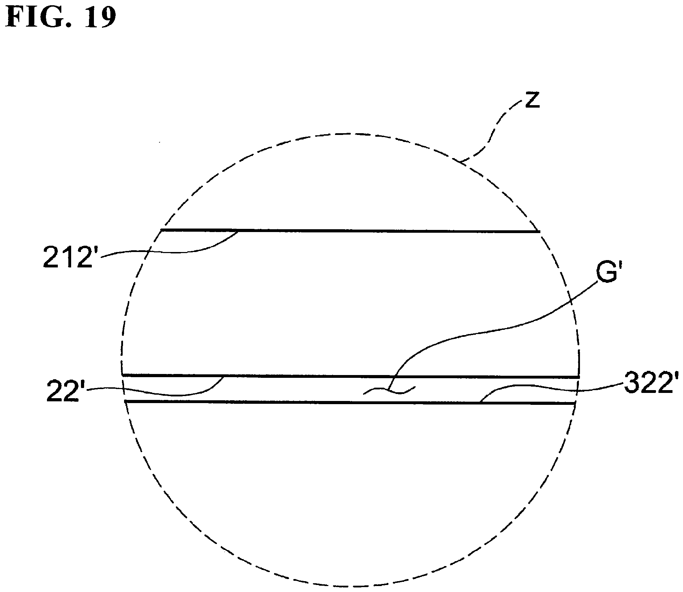

   FIG. 19 is an enlarged view of area z of FIG. 18.
[FIG. 20]

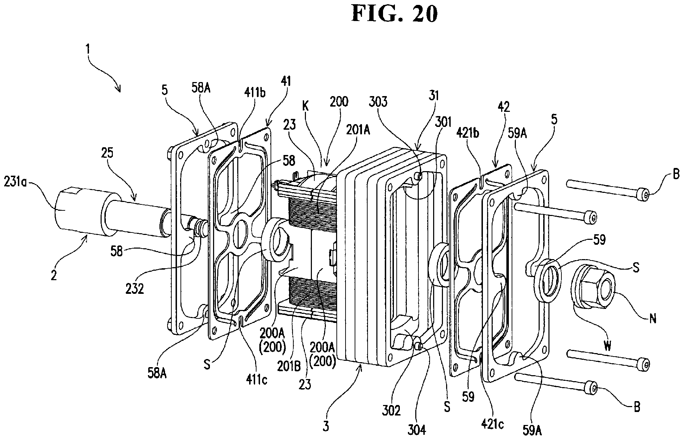

   FIG. 20 is an exploded perspective view of a linear actuator showing still another embodiment of the present invention.
[FIG. 21]

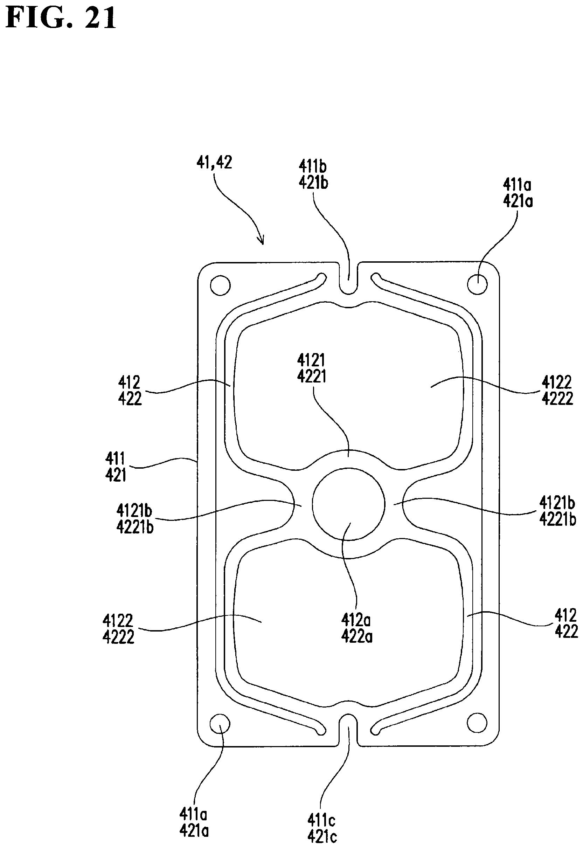

   FIG. 21 is a front view of a leaf spring.
[FIG. 22]

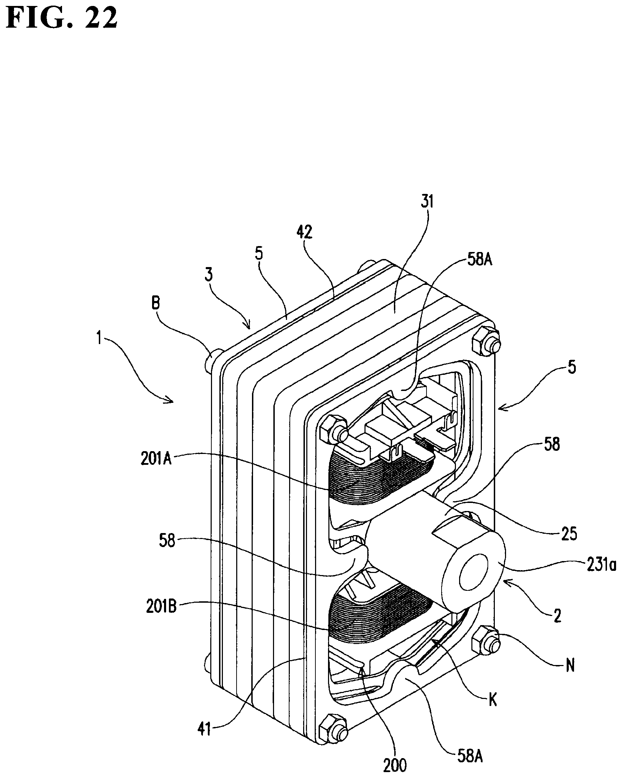

   FIG. 22 is a perspective view, as viewed from the front side, of the completed linear actuator.
[FIG. 23]

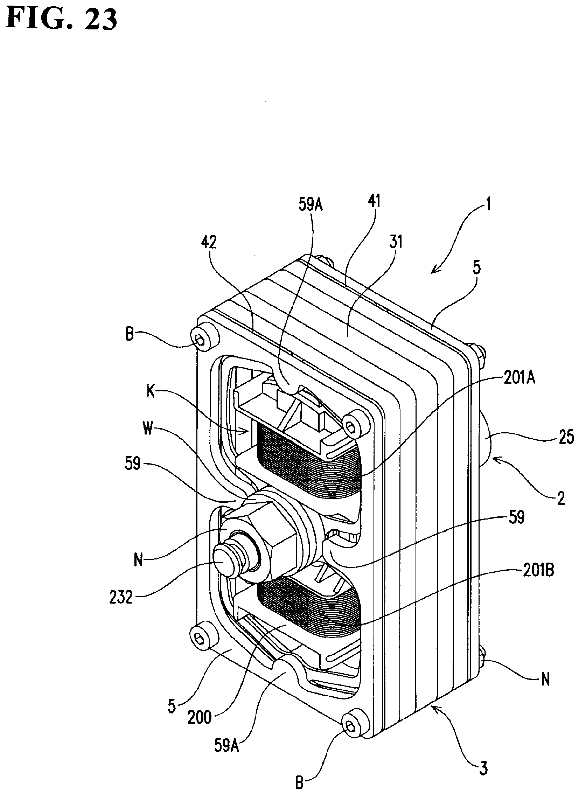

   FIG. 23 is a perspective view, as viewed from the rear side, of the completed linear actuator.
[FIG. 24]

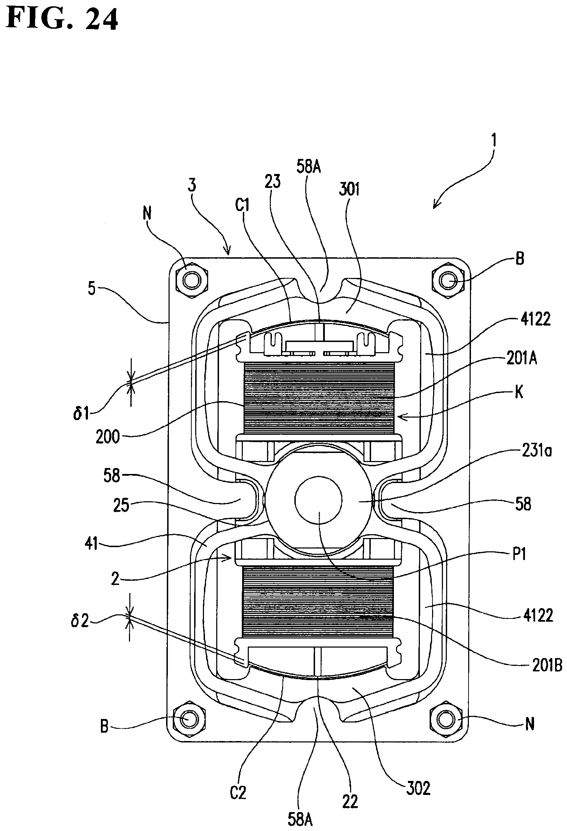

   FIG. 24 is a front view of FIG. 22.
[FIG. 25]

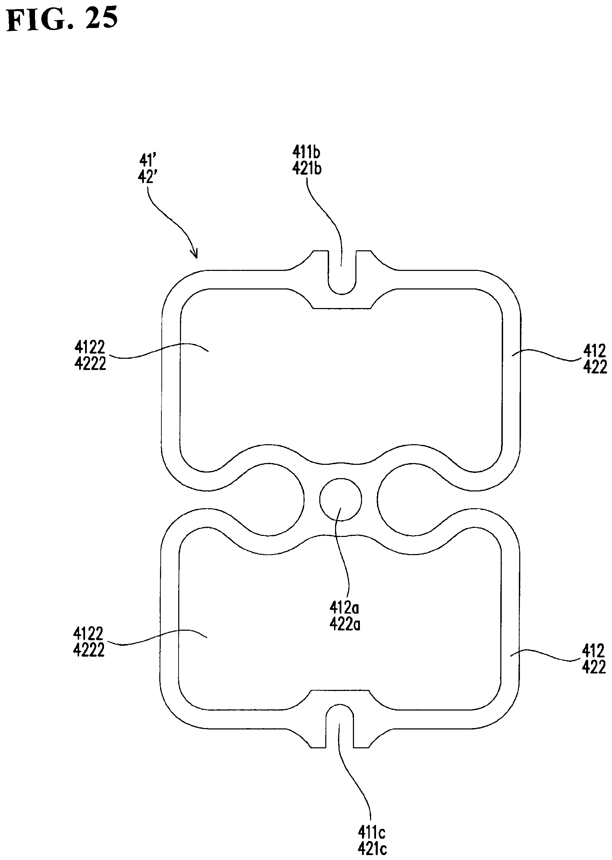

   FIG. 25 is a front view showing a modification of the leaf spring.

### Mode for Carrying Out the Invention

Now, linear actuators according to embodiments of the present invention will be described below, based on the drawings. First, an embodiment of the present invention will be described based on FIGS. 1 to 6. Incidentally, in this embodiment, a case where the linear actuator is used as an outer movable type vibration-damping device mounted on a vehicle will be shown as an example. FIG. 1 is a singular front view of the linear actuator, FIG. 2 is a side view of the same, FIG. 3 is a plan view of the same, FIG. 4 is a general perspective view of the same, FIG. 5 is a longitudinal sectional perspective view of the same, and FIG. 6 is a front view of a leaf spring.

As shown in these figures, the linear actuator 1 according to the embodiment of the present invention has a stator 2, a movable element 3, and leaf springs 41, 42. The stator 2 is disposed on the inner side of the movable element 3, and is fixed to the side of a vehicle body which is not shown. The movable element 3 is so supported that it can be reciprocated in a front-rear direction (thrust direction) relative to the stator 2.

Now, the configuration of the stator 2 will be described. The stator 2 includes an inner core 21, a bobbin 200, coils 201A, 201B, permanent magnets 23, 23, and a shaft 25. The bobbin 200 has, at its upper and lower portions, coil winding recesses 222, 222 for winding the coils 201A, 201B thereon. A permanent magnet setting section (upper end surface) 20a and a permanent magnet setting section (lower end surface) 20b of the inner core 21 are formed as arched surfaces which are protuberant to the upper side and the lower side, respectively. The permanent magnets 23, 23 are secured respectively to the permanent magnet setting section 20a and the permanent magnet setting section 20b of the inner core 21. An upper end surface 21 a and a lower end surface 22b of the permanent magnets 23, 23 are formed as arched surfaces which are protuberant to the upper side and the lower side, respectively.

The shaft 25 is passed in the front-rear direction through the center of the inner core 21. The shaft 25 is provided at its front portion with an enlarged section 231a by enlarging its front portion as compared with its intermediate portion in the axial direction thereof. The shaft 25, with its rear portion side first, is passed through the inner core 21 from the front side of the inner core 21, and an enlarged sleeve 26 equal in diameter to the enlarged section 231a is firmly fitted onto the rear portion. A front sleeve S equal in diameter to the enlarged section 231 a is inserted between the enlarged section 231 a and a front face of the inner core 21. A rear sleeve S equal in diameter to the enlarged sleeve 26 is inserted between the enlarged sleeve 26 and a rear face of the inner core 21.

Now, the configuration of the movable element 3 will be described below. The movable element 3 has a hollow prismatic outer core 31 and flange members 5, 5. The outer core 31 is a stacked body in which silicon steel sheets as exemplary magnetic material are closely stacked together in the front-rear direction (the axial direction of the shaft 25) Fr. An upper surface, of inner surfaces of the outer core 31, is integrally formed with upper opposite sections 301 projecting downwards. A lower surface, of the inner surfaces of the outer core 31, is integrally formed with lower opposite sections 302 projecting upwards. Both of the upper opposite sections 301 and the lower opposite sections 302 are magnetic pole sections composed of iron members. Besides, the upper opposite sections 301 and the lower opposite sections 302 include respective same-shaped sections spaced from each other in the front-rear direction Fr.

An upper magnetic pole surface 311 of the upper opposite section 301 is disposed opposite to an upper end surface 21b of the permanent magnet 23 on the upper side, through a gap C1 of a predetermined width δ1 in the radial direction therebetween. The radial direction in this case is the radial direction having a starting point at the center P1 of the inner core P1. A lower magnetic pole surface 311 of the lower opposite section 302 is disposed opposite to a lower end surface 22b of the permanent magnet 22 on the lower side, through a gap C2 of a predetermined width δ2 in the radial direction therebetween. The radial direction in this case is the radial direction having a starting point at the center P1 of the inner core 21. The width δ1 of the gap C1 in the radial direction and the width δ2 of the gap C2 in the radial direction are set equal. Incidentally, holding shaft bodies 303, 304 are passed, in the front-rear direction, through central portions in the left-right direction of an upper part and a lower part of the outer core 31. Front and rear end portions of the holding shaft bodies 303, 304 are protruding from the outer core 31.

The flange member 5 on the front side is stacked over the outer core 31 from the front side and through the leaf spring 41 therebetween. The flange member 5 on the rear side is stacked over the outer core 31 from the rear side and through the leaf spring 42 therebetween. The flange member 51 is composed of a combination of an inside flange 51 stacked on the front face of the leaf spring 41 and an outside flange 53 stacked on the front side of the inside flange 51. The flange member 5 on the rear side is composed of a combination of an inside flange 51 stacked on the rear face of the leaf spring 42 and an outside flange 53 stacked on the rear side of the inside flange 51.

The inside flanges 51, 51 are formed in a rectangular frame-like shape in front view, and front and rear end portions of the holding shaft bodies 303, 304 are passed through upper portions and lower portions of the inside flanges 51, 51. The outside flanges 53, 53 have main body sections 331, 341 and projected sections 332, 342 which are integrally formed, respectively. The main body sections 331, 341 are formed in a rectangular frame-like shape. The projected sections 332, 342 are projected to the outside from intermediate portions in the vertical direction of the main body sections 331, 341. Further, the configuration of the projected sections 332, 342 will be described in detail. The projected section 332 of the flange member 5 on the front side is composed of leg parts 332a and a continuous part 3321. The projected section 342 of the flange member 5 on the rear side is composed of leg parts 342a and a continuous part 3421.

The leg parts 332a of the flange member 5 on the front side are formed in the manner of rising forward from both left and right sides at intermediate portions in the vertical direction of the main body section 331. The leg parts 342a of the flange member 5 on the rear side are formed in the manner of rising rearward from both left and right sides at intermediate portions in the vertical direction of the main body section 341. In addition, the continuous part 3321 is formed in the form of a flat plate bridgingly disposed between the leg parts 332a. The continuous part 3421 is formed in the form of a flat plate bridgingly disposed between the leg parts 342a. The continuous part 3321 is formed in its central portion with a restriction hole 3322 in which the enlarged section 231 a of the shaft 25 is loosely fitted. The continuous part 3421 is formed in its central portion with a restriction hole 3422 in which the enlarged sleeve 26 is loosely fitted.

A peripheral surface 3322a of the restriction hole 3322 and an outer peripheral surface 231b of the enlarged section 231a are disposed opposite to each other, through an annular gap C3 of a predetermined width δ3 in the radial direction therebetween. A peripheral surface 3422a of the restriction hole 3422 and an outer peripheral surface 26a of the enlarged sleeve 26 are disposed opposite to each other, through an annular gap C4 of a predetermined width δ4 in the radial direction therebetween.

The radial direction in this case is the radial direction having a starting point at the axis of the shaft 25 (which is also the center of the inner core 21). Specifically, each of the radial widths δ3, δ4 of the annular gaps C3, C4 is equal at any position in the circumferential direction. In addition, the width δ3 in the radial direction of the annular gap C3 and the width δ4 in the radial direction of the annular gap C4 are set equal to each other.

The widths δ3, δ4 in the radial direction of the annular gaps C3, C4 are set smaller than the widths δ1, δ2 in the radial direction of the gap C1 and the gap C2.

The leaf spring 41 on the front side is interposed between the outer core 31 and the flange member 5 on the front side. The leaf spring 42 on the rear side is interposed between the outer core 31 and the flange member 5 on the rear side. The leaf springs 41, 42 are formed in the same shape; therefore, with FIG. 6 as a common figure, the leaf springs 41, 42 will be described using different reference symbols. The leaf springs 41, 42 are each formed by blanking a metallic sheet having a uniform thickness. The leaf springs 41, 42 have frame sections 411, 421 laid on the outer core 31, and flexible sections 412, 422 on the inner side of the frame sections 411, 421, which are integrally formed, respectively.

Of the components of the leaf spring 41, 42, the frame section 411, 421 is sandwiched between the flange member 5, 5 and the outer core 31 in the front-rear direction. The frame section 411, 421 is formed with bolt passing holes 411 a, 421a in the four corners thereof. Upper and lower parts of the frame sections 411, 421 are formed at middle positions in the left-right direction thereof with an upper opening 411b and a lower opening 411c through which end portions of the holding shaft bodies 303, 304 are to be passed.

The flexible section 412, 422 is formed in the shape of numeral "8" in front view. In a central part 4121, 4221 corresponding to the intersection of central lines of numeral "8," there is formed a shaft passing hole 412a, 412a through which an intermediate portion of the shaft 25 is to be passed. Besides, in the parts corresponding to the inside of the rings of numeral "8," there are formed insertion openings 4122, 4222 large enough to pass the coil winding recesses 222, 222 through the inside thereof.

The central part 4121 of the leaf spring 41 on the front side is clamped between the enlarged section 231a and the front sleeve S. The central part 4121 of the leaf spring 42 on the rear side is clamped between the enlarged sleeve 26 and the rear sleeve S.

Bolts B are passed in the front-rear direction through the four corners of the movable element 3, and nuts N are fastened to the tips of the bolts B, whereby the outer core 31, the leaf springs 41, 42, and the flange members 5, 5 are united together.

In the linear actuator 1 configured as above, in the condition where the coils 201A, 201B are not energized, the shaft 25 is held in a predetermined position relative to the movable element 3 (outer core) by magnetic forces generated from the permanent magnets 23, 23. When the coils 201A, 201B are energized, the movable element 3 is reciprocated in the front-rear direction Fr along the shaft 25, based on the directions of the magnetic fields generated from the permanent magnets 23, 23 and the magnetic fields generated by the currents flowing in the coils 201A, 201B. By utilizing the reciprocating motion of the movable element 3, the linear actuator 1 can, when mounted on a vehicle, be used as a vibration-damping device. In this case, since the linear actuator 1 configured as above is used as an outer movable type linear actuator, it is mounted by fixing the stator 2 (shaft 25) serving as an inner-side component part to a predetermined position of the vehicle.

When an external force such as a disturbance acts on the linear actuator 1 during running of the vehicle and the movable element 3 is vibrated in the radial direction relative to the stator 2, the leaf springs 41, 42 supporting the movable element 3 relative to the stator 2 are also vibrated in the radial direction. Thus, a disturbance vibration causes the leaf springs 41, 42 to be vibrated largely in the radial direction.

In the embodiment as above, the contact sections capable of making contact with each other in the radial direction are distributed to the side of the movable element 2 and the side of the stator 2. Specifically, the contact sections include the flange members (corresponding to the first contact section) 5, 5 as component parts of the movable element 3 and the shaft (corresponding to the second contact section) 25 as a component part of the stator 2. Besides, the outer peripheral surface 231b of the enlarged section 231a of the shaft 25 and the peripheral surface 3322a of the restriction hole 3322 formed in the continuous part 3321 of the flange member 5 are disposed opposite to each other, through the annular gap C3 with the predetermined width δ3 in the radial direction therebetween.

In addition, the outer peripheral surface 26a of the enlarged sleeve 26 of the shaft 25 and the peripheral surface 3422a of the restriction hole 3422 formed in the continuous part 3421 of the flange member 5 are disposed opposite to each other, through the annular gap C4 with the predetermined width δ4 in the radial direction therebetween. Therefore, the range within which the shaft 25 can be vibrated in the radial direction is determined by the widths δ3, δ4.

In short, the magnitude of the width δ3 relative to the widths δ1, δ2 is so set that the outer peripheral surface 231b of the enlarged section 231a and the peripheral surface 3322a of the restriction hole 3322 make contact with each other before the vibration of the leaf spring 41 due to disturbance becomes a severe vibration such as, for example, resonance.

In addition, the magnitude of the width δ4 relative to the widths δ1, δ2 is so set that the outer peripheral surface 26a of the enlarged sleeve 26 and the peripheral surface 3422a of the restriction hole 3422 make contact with each other before the vibration of the leaf spring 42 due to disturbance becomes a severe vibration such as, for example, resonance. Or, alternatively, the width δ3 relative to the width δ1, δ2 and the width δ4 relative to the widths δ1, δ2 are set in such ranges as to ensure that even upon generation of repeated vibration of the leaf springs 41, 42, the leaf springs 41, 42 are restrained from being broken or undergoing plastic deformation due to the repeated vibration. By such a configuration, the leaf springs 41, 42 can be prevented from undergoing damage, breakage or plastic deformation.

Moreover, the widths δ3, δ4 in the radial direction of the annular gaps C3, C4 are set to be smaller than the widths δ1, δ2 in the radial direction of the gap C1 and the gap C2. Therefore, by the contact between the outer peripheral surface 231b of the enlarged section 231a and the peripheral surface 3322a of the restriction hole 3322 and the contact between the outer peripheral surface 26a of the enlarged sleeve 26 and the peripheral surface 3422a of the restriction hole 3422, it is possible to prevent the permanent magnets 23, 23 from making contact with the upper opposite sections 301 or the lower opposite sections 302 of the outer core 31.

Thus, by setting the relationships between the widths δ1, δ2 and the widths δ3, δ4 as above-mentioned, it is possible to prevent the leaf springs 41, 42 from coming into a resonating state and to prevent the leaf springs 41, 42 from being broken; in addition, it is possible to prevent the permanent magnets 23, 23 from being broken (damaged). Incidentally, while the upper opposite sections 301 and the lower opposite sections 302 are magnetic pole sections formed in the outer core 31, they may be opposite sections or projected sections provided as other sections than the magnetic pole sections.

Now, another embodiment of the present invention will be described below. FIG. 7 is a singular front view of a linear actuator according to this embodiment, FIG. 8 is a perspective view showing a part of a stator, and FIG. 9 is a singular perspective view of a movable element (outer core). In FIG. 7, for convenience, a leaf spring is partly omitted and is indicated by imaginary lines. In addition, component parts equivalent or similar in function to the component parts in the embodiment of FIGS. 1 to 6 above will be denoted by the same reference symbols as used above, and descriptions of them will be omitted.

In the linear actuator 1 in this embodiment, flange members 5, 5 do not have the above-mentioned projected sections 332, 342. Besides, means for preventing the leaf springs 41, 42 from being broken differs from that in the embodiment of FIGS. 1 to 6.

Specifically, in this embodiment, the means for preventing breakage of the leaf springs 41, 42 is composed of outer-side projections 31A, 31B provided specially in the outer core 31 and inner-side projections 60, 61 provided specially in the inner core 21. Inside surfaces 312, 313 of the outer core 31 and outside surfaces 210a, 211a of the inner core 21 are formed as flat surfaces which are along the vertical direction and are parallel to each other.

Now, the configuration of the outer-side projections 31A, 31B will be described. The outer-side projections 31A on one side are formed integrally with the inside surface 312 on one side of the outer core 31. The outer-side projections 31A on the one side are composed of an outer-side upper projected section 54 and an outer-side lower projected section 56. The outer-side projections 31B on the other side are formed integrally with the inside surface 313 on the other side of the outer core 31. The outer-side projections 31B on the other side are composed of an outer-side upper projected section 55 and an outer-side lower projected section 57.

Each of the outer-side upper projected sections 54, 55 and the outer-side lower projected sections 56, 57 is formed in the shape of a rectangular parallelopiped which is elongated in the front-rear direction. The length in the front-rear direction of each of the outer-side upper projected sections 54, 55 and the outer-side lower projected sections 56, 57 is set equal to the length in the front-rear direction of the outer core 31. The inward projecting amounts of the outer-side upper projected sections 54, 55 and the outer-side lower projected sections 56, 57 are set to be equal.

The outer-side upper projected section 54 on the one side and the outer-side lower projected section 56 on the one side are spaced from each other along the vertical direction. The outer-side upper projected section 55 on the other side and the upper-side lower projected section 57 on the other side are spaced from each other along the vertical direction. Vertically opposed surfaces 500, 510 of the outer-side upper projected section 54 on one side and the outer-side lower projected section 56 are formed as flat surfaces along the front-rear direction. Vertically opposed surfaces 501, 511 of the outer-side upper projected section 55 on the other side and the outer-side lower projected section 57 are formed as flat surfaces along the front-rear direction.

Now, the configuration of the inner-side projections 60, 61 will be described. The inner-side projections 60, 61, corresponding to projected sections, are formed integrally with the outside surfaces 210a, 211a of the inner core 21, and are inserted between the outer-side upper projected sections 54, 55 and the outer-side lower projected sections 56, 57, respectively. The outward projecting amounts of the inner-side projections 60, 61 are set to be equal. Each of the inner-side projections 60, 61 is formed in the shape of a rectangular parallelopiped which is elongated in the front-rear direction. It is to be noted here, however, that the length of each of the inner-side projections 60, 61 is set to be smaller than the length in the front-rear direction of the inner core 21. The inner-side projection 60 is contained between the outer-side upper projected section 54 and the outer-side lower projected section 56, and the inner-side projection 61 between the outer-side upper projected section 55 and the outer-side projected section 57. Therefore, those portions for containing the inner-side projections 60, 61 which are defined respectively by the outer-side upper projected section 54 and the outer-side lower projected section 56 and by the outer-side upper projected section 55 and the outer-side lower projected section 57 correspond to the recesses.

Upper surfaces 600, 610, lower surfaces 601, 611 and side surfaces 602, 612 of the inner-side projections 60, 61 are formed as flat surfaces along the front-rear direction. The upper surface 600 of the inner-side projection 60 on the one side and the opposed surface 500 of the outer-side projected section 54 on the one side are disposed opposite to each other, through a gap C5 of a predetermined width δ5 in the radial direction therebetween. The radial direction in this case is the vertical direction, and the upper surface 600 and the opposed surface 500 are opposed to each other in the vertical direction. The lower surface 601 of the inner-side projection 60 on the one side and the opposed surface 510 of the outer-side lower projected section 56 on the one side are disposed opposite to each other, through a gap C6 of a predetermined width δ6 in the radial direction therebetween. The radial direction in this case is the vertical direction, and the lower surface 601 and the opposed surface 510 are opposed to each other in the vertical direction. The side surface 602 of the inner-side projection 60 on the one side and the inside surface 312 on the one side of the outer core 31 are disposed opposite to each other, through a gap C7 with a width δ7 in the radial direction therebetween. The radial direction in this case is the left-right direction, and the side surface 602 and the inside surface 312 are opposed to each other in the left-right direction.

The upper surface 610 of the inner-side projection 61 on the other side and the opposed surface 501 of the outer-side upper projected section 55 on the other side are disposed opposite to each other, through a gap C8 of a predetermined width δ8 in the radial direction therebetween. The radial direction in this case is the vertical direction, and the upper surface 610 and the opposed surface 501 are opposed to each other in the vertical direction. The lower surface 611 of the inner-side projection 61 on the other side and the opposed surface 511 of the outer-side lower projected section 57 on the other side are disposed opposite to each other, through a gap C9 of a predetermined width δ9 in the radial direction. The radial direction in this case is the vertical direction, and the lower surface 611 and the opposed surface 511 are opposed to each other in the vertical direction. The side surface 612 of the inner-side projection 61 on the other side and the inside surface 313 on the other side of the outer core 31 are disposed opposite to each other, through a gap C10 of a predetermined width δ10 in the radial direction therebetween. The radial direction in this case is the left-right direction, and the side surface 612 and the inside surface 313 are opposed to each other in the left-right direction.

These predetermined widths δ5 to δ10 are set to be smaller than the above-mentioned width δ1 between the upper magnetic pole surface 311 of the upper opposite section 301 and the upper end surface 21b of the permanent magnet 23 on the upper side. In addition, they are set to be smaller than the above-mentioned width δ2 between the lower magnetic pole surface 311 of the lower opposite section 302 and the lower end surface 22b of the permanent magnet 22 on the lower side. Incidentally, the magnitude relationship among the widths δ5 to δ10 are δ7 = δ10, δ5 = δ6 = δ8 =δ9, and, in this case, δ5 = δ6 = δ8 = δ9 < δ7 = δ10 < δ1 = δ2.

Incidentally, though not shown, the side surfaces 602, 612 of the inner-side projections 60, 61 are formed with recesses in which connecting wires for connecting the coils 201A and 201B to each other are to be contained. The recesses are preferably so configured as to lay out the connecting wires along the outside surfaces 210a, 211 a. The other configurations in this embodiment are the same as in the above-described embodiment, and, therefore, they will be denoted by the same reference symbols as used above, and descriptions of them will be omitted.

In this embodiment configured as above, the outer-side upper projected sections 54, 55, the outer-side lower projected sections 56, 57, the inner-side projections 60, 61, and the inside surfaces 312, 313 of the outer core 31 each function as the contact section.

In the configuration as above, the deformation amounts in the radial direction of the leaf springs 41, 42 are limited. Specifically, the upward deformation amounts of the leaf springs 41, 42 are limited to the width δ5, by the contact of the opposed surface 500 of the outer-side upper projected section 54 on the one side with the upper surface 600 of the inner-side projection 60 on the one side. Besides, the upward deformation amounts are limited to the width δ8, by the contact of the opposed surface 501 of the outer-side upper projected section 55 on the other side with the upper surface 610 of the inner-side projection 61 on the other side.

The downward deformation amounts of the leaf springs 41, 42 are limited to the width δ6, by the contact of the opposed surface 510 of the outer-side lower projected section 56 on the one side with the lower surface 601 of the inner-side projection 60 on the one side. In addition, the downward deformation amounts are limited to the width δ9, by the contact of the opposed surface 511 of the outer-side lower projected section 57 on the other side with the lower surface 611 of the inner-side projection 61 on the other side.

The rightward deformation amounts of the leaf springs 41, 42 are limited to the width δ7, by the contact of the inside surface 312 on the one side of the outer core 31 with the side surface 602 of the inner-side projection 60 on the one side. The leftward deformation amounts of the leaf springs 41, 42 are limited to the width δ10, by the contact of the inside surface 313 on the other side of the outer core 31 with the side surface 612 of the inner-side projection 61 on the other side.

Incidentally, the side surfaces 602, 612 of the inner-side projections 60, 61 are provided with the recesses in which the connecting wires for connecting the coils 201A and 201B to each other are to be contained. This ensures that even if the outer core 31 is deformed in the radial direction and the inside surface 312 or 313 comes into contact with the side surface 602 or 612 of the inner-side projection 60 or 61, the connecting wires can be prevented from being broken or damaged.

In this embodiment of the present invention, the widths δ5 to δ10 are set to be smaller than such a deformation amount of the leaf springs 41, 42 that the leaf springs 41, 42 would be damaged, and this configuration makes it possible to prevent the leaf springs 41, 42 from being broken or undergoing plastic deformation and to maintain the function of the linear actuator 1. Especially, by the configuration in which the widths δ5, δ6, δ8 and δ9 are all set to be smaller than the widths δ1, δ2, the permanent magnet 23 can be prevented from making contact with the upper opposite section 301 of the outer core 31, and the permanent magnet 22 can be prevented from making contact with the lower opposite section 302 of the outer core 31. Consequently, the permanent magnets 23, 23 can be prevented from being broken (damaged).

Now, a further embodiment of the present invention will be described below, based on FIG. 10. FIG. 10 is a front view of a linear actuator showing this embodiment. The configuration in regard of which this embodiment differs from the embodiment of FIGS. 7 to 9 will be described. In this embodiment, means for preventing breakage of leaf springs 41, 42 differs from that in the embodiment of FIGS. 7 to 9. In the embodiment of FIGS. 7 to 9, the outer-side projections 5A, 5B have been composed of the outer-side upper projected sections 54, 55 and the outer-side lower projected sections 56, 57 spaced from each other in the vertical direction, respectively. In addition, the inner-side projections 60, 61 have been interposed between the outer-side upper projected sections 54, 55 and the outer-side lower projected sections 56, 57, respectively. In contrast to this configuration, the present embodiment adopts a configuration in which inner-side projections are provided as pairs of upper and lower projections, and outer-side projections are each interposed between the inner-side projections.

Now, the configuration of the inner-side projections 21A, 21B will be described. The inner-side projections 21A on one side are formed integrally with an outside surface 210a on the one side of an inner core 21. The inner-side projections 21A on the one side are composed of an inner-side upper projected section 70 and an inner-side lower projected section 72. The inner-side projections 21B on the other side are formed integrally with an outside surface 211 a on the other side of the inner core 21. The inner-side projections 21B on the other side are composed of an inner-side upper projected section 71 and an inner-side lower projected section 73.

Each of the inner-side upper projected sections 70, 71 and the inner-side lower projected sections 72, 73 is formed in the shape of a rectangular parallelopiped which is elongated in the front-rear direction. The length in the front-rear direction of each of the inner-side upper projected sections 70, 71 and the inner-side lower projected sections 72, 73 is set to be smaller than the length in the front-rear direction of the inner core 21. The outward projecting amounts of the inner-side upper projected sections 70, 71 and the inner-side lower projected sections 72, 73 are set to be equal.

The inner-side upper projected section 70 on the one side and the inner-side lower projected section 72 are spaced from each other in the vertical direction. The inner-side upper projected section 71 on the other side and the inner-side lower projected section 73 on the other side are spaced from each other in the vertical direction. Vertically opposed surfaces 700, 701 of the inner-side upper projected section 70 on the one side and the inner-side lower projected section 72 on the one side are formed as flat surfaces along the front-rear direction. Vertically opposed surfaces 710, 711 of the inner-side upper projected section 71 on the other side and the inner-side lower projected section 73 on the other side are each formed as flat surfaces along the front-rear direction.

Now, the configuration of the outer-side projections 80, 81 will be described. The outer-side projection 80 on the one side is formed integrally with an inside surface 312 on the one side of the outer core 31, and is inserted respectively between the inner-side upper projected section 70 and the inner-side lower projected section 72. The outer-side projection 81 on the other side is formed integrally with an inside surface 313 on the other side of the outer core 31, and is inserted respectively between the inner-side upper projected section 71 and the inner-side lower projected section 73.

The inward projecting amounts of these outer-side projections 80, 81 are set to be equal. Each of the outer-side projections 80, 81 is formed in the shape of a rectangular parallelopiped which is elongated in the front-rear direction. The length of each of the outer-side projections 80, 81 is set to be equal to the length in the front-rear direction of the outer core 31. Upper surfaces 800, 810, lower surfaces 801, 811 and side surfaces 802, 812 of the outer-side projections 80, 81 are formed as flat surfaces along the front-rear direction.

The upper surface 800 of the outer-side projection 80 on the one side and the opposed surface 700 of the inner-side upper projected section 70 on the one side are disposed opposite to each other, through a gap C11 of a predetermined width δ11 in the radial direction therebetween. The radial direction in this case is the vertical direction, and the upper surface 800 and the opposed surface 700 are opposed to each other in the vertical direction. The lower surface 801 of the outer-side projection 80 on the one side and the opposed surface 701 of the inner-side lower projected section 72 on the one side are disposed opposite to each other, through a gap C12 of a predetermined width δ12 in the radial direction therebetween. The radial direction in this case is the vertical direction, and the lower surface 801 and the opposed surface 701 are opposed to each other in the vertical direction. The side surface 802 of the outer-side projection 80 on the one side and an outside surface 210a on the one side of the inner core 21 are disposed opposite to each other, through a gap C13 of a predetermined width δ13 in the radial direction therebetween. The radial direction in this case is the left-right direction, and the side surface 802 and the outside surface 210a are opposed to each other in the left-right direction.

The upper surface 810 of the outer-side projection 81 on the other side and the opposed surface 710 of the inner-side upper projected section 71 on the other side are disposed opposite to each other, through a gap C14 of a predetermined width δ14 in the radial direction therebetween. The radial direction in this case is the vertical direction, and the upper surface 810 and the opposed surface 710 are opposed to each other in the vertical direction. The lower surface 811 of the outer-side projection 81 on the other side and the opposed surface 711 of the inner-side lower projected section 73 on the other side are disposed opposite to each other, through a gap C15 of a predetermined width δ15 in the radial direction therebetween. The radial direction in this case is the vertical direction, and the lower surface 811 and the opposed surface 711 are opposed to each other in the vertical direction. The side surface 812 of the outer-side projection 81 on the other side and a side surface 211 on the other side of the inner core 21 are disposed opposite to each other, through a gap C16 of a predetermined width δ16 in the radial direction. The radial direction in this case is the left-right direction, and the side surface 812 and the side surface 211 are opposed to each other in the left-right direction.

These predetermined widths δ10 to δ16 are set to be smaller than the above-mentioned width δ1 between the upper magnetic pole surface 311 of upper opposite section 301 and the upper end surface 21b of the permanent magnet 23 on the upper side. Besides, they are set to be smaller than the above-mentioned width δ2 between the lower magnetic pole surface 311 of the lower opposite section 302 and the lower end surface 22b of the permanent magnet 22 on the lower side.

In this embodiment, the contact sections are composed of the inner-side upper projected sections 70, 71, the inner-side lower projected sections 72, 73, the outer-side projections 80, 81 and the outside surfaces 210a, 211a of the inner core 21. Besides, the inner-side upper projected sections 70, 71 and the inner-side lower projected sections 72, 73 each correspond to the first contact section, whereas the outer-side projections 80, 81 each correspond to the second contact section. In addition, the outer-side projection 80 is contained between the inner-side upper projected section 70 and the inner-side lower projected section 72, and the outer-side projection 81 between the inner-side upper projected section 71 and the inner-side lower projected section 73. Therefore, those portions for containing the outer-side projections 80, 81 which are defined respectively by the inner-side upper projected section 70 and the inner-side lower projected section 72 and by the inner-side upper projected section 71 and the inner-side lower projected section 73 correspond to the recesses. The magnitude relationships among δ11 to δ16 are δ13 = δ16, δ11 = δ12 = δ14 = δ15 and, in this case, δ11 = δ12 = δ14 = δ15 < δ13 = δ16 < δ1 = δ2.

Incidentally, though not shown, the inner-side upper projected sections 70, 71, the inner-side lower projected sections 72, 73, and the outside surfaces 210a, 211 a of the inner core 21 are formed with recesses in which connecting wires for connecting the coils 201A, 201B to each other are to be contained. The recesses are preferably so configured that the connecting wires are contained on the inner side relative to the outside surfaces 210a, 211a. The other configurations in this embodiment are the same as in the above-described second embodiment, and, therefore, they will be denoted by the same reference symbols as used above, and descriptions of them will be omitted.

In the configuration as above, the radial deformation amounts of the leaf springs 41, 42 are limited. Specifically, the upward deformation amounts of the leaf springs 41, 42 are limited to the width δ11, by the contact of the upper surface 800 of the outer-side projection 80 on the one side with the opposed surface 700 of the inner-side upper projected section 70 on the one side. In addition, the upward deformation amounts are limited to the width δ14, by the contact of the upper surface 810 of the outer-side projection 81 on the other side with the opposed surface 710 of the inner-side upper projected section 71 on the other side.

The downward deformation amounts of the leaf springs 41, 42 are limited to the width δ12, by the contact of the lower surface 801 of the outer-side projection 80 on the one side with the opposed surface 701 of the inner-side lower projected section 72 on the one side. Besides, the downward deformation amounts are limited to the width δ15, by the contact of the lower surface 811 of the outer-side projection 81 on the other side with the opposed surface 711 of the inner-side lower projected section 73 on the other side.

The rightward deformation amounts of the leaf springs 41, 42 are limited to the width δ13, by the contact of the side surface 802 of the outer-side projection 80 on the one side with the outside surface 210a on the one side of the inner core 21. The leftward deformation amounts of the leaf springs 41, 42 are limited to the width δ16, by the contact of the side surface 812 of the outer-side projection 81 on the other side with the side surface 211 on the other side of the inner core 21. With the radial deformation amounts of the leaf springs 41, 42 thus restricted, the leaf springs 41, 42 can be prevented from being broken or undergoing plastic deformation.

In this embodiment of the present invention, the widths δ11 to δ16 are set to be smaller than such a deformation amount that the leaf springs 41, 42 would be broken or plastically deformed, and this configuration makes it possible to prevent the leaf springs 41, 42 from being broken or plastically deformed and to maintain the function of the leaf springs 41, 42. Especially, the configuration in which the widths δ11, δ12, δ14 and δ15 are all set to be smaller than the widths δ1, δ2 makes it possible to prevent the permanent magnet 23 from making contact with the upper opposite section 301 of the outer core 31 and to prevent the permanent magnet 22 from making contact with the lower opposite section 302 of the outer core 31. As a result, the permanent magnets 23, 23 can be prevented from being broken (damaged). The inner-side upper projected sections 70, 71, the inner-side lower projected sections 72, 73, and the outside surfaces 210a, 211a of the inner core 21 are provided with recesses in which connecting wires for connecting the coils 201A and 201B to each other are to be contained. This configuration ensures that even if the side surface 802 or 812 of the outer-side projection 80 or 81 makes contact with the outside surface 210a or 211a of the inner core 21, the connecting wires can be prevented from being damaged.

While the preferred embodiments of the present invention have been described above, the application range of the invention is not limited to these embodiments, and various modifications are possible within the scope of the invention. For instance, while the above embodiments have been described assuming that the linear actuator 1 is an outer movable type linear actuator, each of the embodiments can be used as an inner movable type linear actuator 1 in which the outer core 31 side is a stator and the inner core 21 side is a movable element. In the case of the just-mentioned configuration, also, the same effect as those in the above embodiments can be produced.

In the embodiment of FIG. 10, the projections are distributed to the outer core 31 and to the inner core 21. However, a configuration may be adopted in which the outer core 31 is not provided with any projection but is provided in its inside surfaces with recesses in which projections provided at the side surfaces of the inner core 21 are to be inserted.

Or, alternatively, a configuration may be adopted in which the inner core 21 is not provided with any projection but is provided in its outside surfaces with recesses in which projections provided at the inside surfaces of the outer core 31 are to be inserted. Besides, the projections and the recesses may be opposed to each other through a gap of a predetermined width in the radial direction thereof so that the projections and the recesses make contact with each other before the permanent magnets 23, 23 make contact with the upper opposite sections 301 and the lower opposite sections 302. Such a configuration, also, makes it possible to prevent the permanent magnets 23, 23 and the leaf springs 41, 42 from being damaged or broken.

Now, yet another embodiment of the present invention will be described below referring to the drawings. As shown in FIGS. 11 and 12, a linear actuator 1 according to this embodiment is an outer movable type linear actuator in which a movable section 3 is disposed in the periphery (on the outside) of a stationary section 2.

The stationary section 2 includes an inner core (stator) 21, a bobbin 200 capable of covering the inner core 21, permanent magnets 23 disposed at those upper end and lower end surfaces of the inner core 21 which are not covered with the bobbin 200, coils 24 wound around the outer periphery of the bobbin 200, and a shaft 25 disposed in a central portion. Incidentally, the axial direction of the shaft 25 is the same as the direction in which the movable element 3 is reciprocated, namely, a thrust direction; thus, in the following description, the axial direction of the shaft 25 and the thrust direction have the same meaning. Besides, the "front" in the following description means the direction as viewed from the counter-attachment side (the side of a cover 7 described later) of the axial direction of the shaft 25.

As shown in FIGS. 12 to 15, the inner core 21 is composed of thin steel sheets (e.g., silicon steel sheets) stacked in the thrust direction, for example. The inner core 21 is provided in its central portion with a shaft passing hole 211 through which the shaft 25 can be passed. In this embodiment, a shaft passing hole 211 which is tetragonal in aperture shape is applied (see FIGS. 12 to 14). In addition, the inner core 21 is provided, at its upper end surface and its lower end surface on the opposite sides of the shaft passing hole 211, with permanent magnet setting sections 212 where the permanent magnets 23 can be disposed. The permanent magnet setting section 212 is composed of a flat surface.

As shown in FIGS. 12 and 15 (the bobbin 200 is omitted in FIGS. 13 and 14), the bobbin 200 (insulator) is composed of bobbin units 22U bisected in the thrust direction, and the inner core 21 and the permanent magnets 23 are clamped between the bobbin units 22U from both ends in the axial direction of the shaft 25, whereby the whole part of the inner core 21 and a part of the permanent magnets 23 can be covered. The bobbin 200 has a shaft passing hole 221 through which the shaft 25 can be passed, and an upper-lower pair of coil winding recesses 222 around which the coils 24 can be wound. The shaft passing hole 221 formed in the bobbin 200 is a round hole which communicates with the shaft passing hole 211 formed in the inner core 21 and which is a little greater than the shaft passing hole 211; besides, the round hole is so set that a spacer S can be fitted therein.

As shown in FIGS. 12 to 15, the permanent magnets 23 are disposed respectively at the pair of permanent magnet setting sections 212 of the inner core 21. At each of the permanent magnet setting sections 212, a plurality of (in the example shown, two) permanent magnets 23 are arranged juxtaposedly along the axial direction of the shaft 25. Besides, in this embodiment, flat plate-like permanent magnets 23 are applied. Consequently, the surfaces of the plurality of flat plate-like permanent magnets 23 secured to each permanent magnet setting section 212 formed as a flat surface are flush or substantially flush with each other.

As shown in FIGS. 12 to 15, the shaft 25 is mounted in the state of being passed through the shaft passing hole 221 in the bobbin 200 and the shaft passing hole 211 in the inner core 21. In this embodiment, the shaft 25 applied has an outer shape corresponding to the aperture shape of the shaft passing hole 211 formed in the inner core 21; namely, the shaft 25 applied is tetragonal or roughly tetragonal in outer edge shape in cross section. The shaft 25 is provided at both end portions thereof with recesses 251 extending in the axial direction, and female screw sections are formed at inner peripheral surfaces of the recesses 251. Bolts B1 can be screw-engaged with the female screw sections (see FIG. 15).

The coils 24 are for generating a magnetic flux by which the movable section 3 is reciprocated. As shown in FIGS. 12 to 15, the coils 24 are wound respectively around the coil winding recesses 222 of the bobbin 200, and are so wired that currents can flow in an upper portion and a lower portion on the upper and lower sides of the shaft 25. By changing over the flow directions of the currents, the movable section 3 to be described below can be reciprocated.

As shown in FIGS. 12 and 15, the movable section 3 is roughly hollow prismatic in shape, wherein an outer core (movable element) 31 and a movable spacer 32 (while it is composed of a first unit movable spacer 321 and a second unit movable spacer 322 of somewhat different shapes in the example shown, it may be a movable spacer composed of unit movable spacers of the same shape) as movable magnetic poles are stacked on each other in the thrust direction. In this embodiment, the movable section 3 is applied in which the outer core 31 and the movable spacer 32 are each bisected into upper and lower movable section units 3U which are assembled onto each other to form a roughly hollow prismatic body; however, a movable section may be applied in which a non-bisected movable element and a non-bisected movable spacer are used.

As shown in FIGS. 12 to 15, the outer core 31 has thin steel sheets (e.g., silicone steel sheets) stacked in the thrust direction and united. Besides, that surface of the outer core 31 which is bulged to the permanent magnet 23 side relative to the movable spacer 32 and which is opposed to the permanent magnet 23 functions as a magnetic pole surface 311, and this magnetic pole surface 311 is set to be a flat surface parallel to the permanent magnet 23. This ensures that a gap G extending rectilinearly and having a predetermined size is formed between an inside surface of the outer core 31 and an outside surface of the inner core 21, or between the magnetic pole surface 311 and the permanent magnet 23, which are opposed to each other (see FIG. 14).

The movable section 3 obtained by integrally assembling the outer core 31 and the movable spacer 32 as above is provided, at central portions in the width direction of its upper end portion and its lower end portion, with an upper-lower pair of holding shaft bodies (parallel pins) 33 penetrating the outer core 31 and the movable spacer 32 in the thrust direction, and both end portions of the holding shaft bodies 33 are protruded beyond the movable spacer 32 in the thrust direction. In addition, the movable section 3 rectangular in shape in front view is provided in its four corner with bolt passing holes 3a penetrating it in its thickness direction (see FIG. 12).

The movable section 3 configured as above is connected to the stationary section 2 through a bearing 4. In this embodiment, the bearing 4 connects the stationary section 2 and the movable section 3 to each other coaxially and supports the movable section 3 so that the movable section 3 can be reciprocated relative to the stationary section 2, through its own elastic deformation. The bearing 4 is composed of a plurality of leaf springs 41 stacked together.

As shown in FIGS. 12 to 15, the leaf spring 41 is a thin sheet-like body which integrally has a frame-like frame section 411 stacked on the movable spacer 32 of the movable section 3, and a flexible section 412 provided on the inner side of the frame section 411. The leaf springs 41 are formed by blanking, for example. The frame section 411 roughly rectangular in shape in front view is provided in its four corners with bolt passing holes 411 a penetrating it in its thickness direction, and the frame section 411 of the leaf spring 41 is sandwiched between the flange member 5 and the movable section 3. In addition, the frame section 411 is provided, in central portions in the width direction of its upper and lower end portions, with an upper opening 411b and a lower opening 411c opening to the upper side or the lower side, in such a manner that both end portions of the holding shaft bodies 33 provided in the movable section 3 can be fitted in the upper opening 411b and the lower opening 411c. The flexible section 412 is roughly in the shape of numeral 8 in front view, and is provided in its central portion with a shaft passing hole 412a through which the shaft 25 can be passed. The shaft passing hole 412a can communicate with the shaft passing hole 211 formed in the inner core 21 and with the shaft passing hole 221 formed in the bobbin 200. In this embodiment, the aperture shape of the shaft passing hole 412a is set identical or roughly identical to the aperture shape of the shaft passing hole 211 formed in the inner core 21, namely, a tetragonal shape or a roughly tetragonal shape (see FIGS. 12 to 14). Of the leaf spring 41, the central portion of the flexible section 412 is clamped between spacers S, whereas the frame section 411 is held between the movable section 3 (specifically, the movable spacer 32) and the flange member 5.

As shown in FIGS. 12 and 15, the flange member 5 has a frame-like shape substantially the same as the frame section 411 of the leaf spring 41. The flange member 5 is provided in its four corners with bolt passing holes 51a penetrating it in its thickness direction, and is provided, in central portions in the width direction of its upper and lower end portions, with recesses 51b in which end portions of the holding shaft bodies 33 can be contained with some play in the thrust direction.

Incidentally, in the linear actuator 1 according to this embodiment, as shown in FIGS. 11, 12 and 15, a base 6 (attaching section) is provided on the side of an end portion on one side of the shaft 25, and a cover 7 which covers the inside of the linear actuator 1 from the other side and which can prevent access to the inside of the linear actuator 1 is provided on the side of an end portion on the other side. The cover 7 is a plate-like member which is the same or substantially the same in outer shape as the flange member 5 and the leaf springs 41. The cover 7 is provided in its four corners with bolt passing holes 7a penetrating it in its thickness direction, and is provided in its central portion with a shaft passing hole 7b penetrating it in its thickness direction.

In the linear actuator 1 configured as above, the shaft 25 roughly in the shape of a tetragonal prism is passed through the shaft passing holes 412a formed in the leaf springs 41 and opened in a corresponding tetragonal shape, whereby the shaft 25 is supported so that it cannot be turned about its axis relative to the leaf springs 41. In addition, the shaft 25 is passed through the shaft passing hole 221 in the bobbin 200 and the shaft passing hole 211 in the inner core 21, whereby the whole part of the stationary section 2 including the inner core 21 can be prevented from being relatively inclined around the axis of the shaft 25. Besides, the movable section 3 and the stationary section 2 can be relatively positioned, taking as a reference the pair of leaf springs 41 which are located as such positions as to permit sandwiching in the axial direction of the shaft 25. Specifically, the movable section units 3U bisected into upper and lower units are brought closer to each other so as to clamp the stationary section 2 therebetween from the upper and lower sides. Then, of the pair of upper and lower holding shaft bodies 33 provided in the movable section 3, the holding shaft body 33 on one side is fitted into the upper opening 411b in the frame section 411, and the holding shaft body 33 on the other side is fitted into the lower opening 411c in the frame section 411. Both end portions of these holding shaft bodies 33 are contained in the recesses 51b in the pair of flange members 5 located at such positions that the stationary section 2 and the pair of leaf springs 41 can be clamped therebetween in the axial direction of the shaft 25 (see FIGS. 12 and 15). Subsequently, bolts B2 are passed through the bolt passing holes 7a in the cover 7, the bolt passing holes 51a in the flange member 5, the bolt passing holes 411 a in the leaf springs 41, and the bolt passing holes 3a in the movable section 3, which holes communicate with one another in the thrust direction. Then, tip portions of the bolts B2 are fastened to nuts (not shown), whereby the linear actuator 1 is obtained in which the cover 7, the flange member 5 and the leaf springs 41 are assembled integrally.

In the linear actuator 1 according to this embodiment configured as above, a parallel gap G extending rectilinearly is formed between an inside surface of the outer core 31 and an outside surface of the inner core 21, or between the magnetic pole surface 311 and the surface of the permanent magnet 23, which are opposed to each other (see FIG. 14). In the condition where the coils 24 are not energized, the shaft 25 in the linear actuator 1 is held in a predetermined position relative to the movable section 3 (outer core 31) by magnetic forces generated from the permanent magnets 23. When the coils 24 are energized, the movable section 3 is reciprocated in the thrust direction along the shaft 25, based on the directions of the magnetic fields generated from the permanent magnets 23 and the magnetic fields generated by the current flowing in the coils 24.

Thus, in the linear actuator 1 according to this embodiment, the flat plate-like permanent magnet 23 is used, which is advantageous in that machining can be performed easily, the amount of the permanent magnet 23 used and the amount of waste generated upon the machining are reduced, and a reduction in cost can be effectively contrived, as compared with the bowlike permanent magnet used conventionally. Besides, the cost of the permanent magnet 23 itself can be reduced, whereby a reduction in the total cost of the linear actuator 1 can also be contrived.

Further, in this embodiment, the application of the flat plate-like permanent magnet 23 ensures that the bulk (overall height dimension) of the permanent magnet 23 itself can be suppressed to a low value (thin form), as compared with the case where the bowlike permanent magnet 23 is applied. Therefore, by a method in which the height dimension of the coil winding recesses 222 in the bobbin 200 is set comparatively large and the number of turns in the coils 24 is set comparatively large, the current magnetomotive force (current × number of turns in coil) at the same current can be increased, and the capability of the linear actuator 1 can be enhanced. In addition, a compacter design of the linear actuator 1 itself can be contrived.

The linear actuator 1 in which a reduced cost and a compacter design can thus be realized is excellent in versatility and the degree of freedom of installation, and is favorably applicable also to automobiles accompanied by a keen demand for cost reduction. Preferable application examples of the linear actuator 1 include application to a vibration-damping mechanism for a vehicle body, specifically, application as an actuator for actively moving a weight disposed at an appropriate portion of a vehicle body. In this case, vibrations of the vehicle body can be favorably suppressed by utilizing the reaction force of the mass of the weight, or the movable section 3, vibrated by the linear actuator 1.

In addition, in the linear actuator 1 according to this embodiment, the shaft 25 and the bearing 4 are so assembled as to be incapable of relative rotation, and movement of the stationary section 2 and the movable section 3 in a plane orthogonal to the axial direction of the shaft 25 is restrained by the bearing 4. Therefore, the stationary section 2 and the movable section 3 can be prevented from being inclined (shifted) around the axis of the shaft 25. As a result, the magnetic pole surface 311 opposed to the flat plate-like permanent magnet 23 can be formed flat. Accordingly, a parallel gap G can be easily secured between the flat plate-like permanent magnet 23 and the magnetic pole surface 311, without need for a high machining accuracy or a high assembling accuracy and without damaging the permanent magnet 23.

A linear actuator 1' according to a yet further embodiment of the present invention is an inner movable type linear actuator 1' in which, as shown in FIGS. 16 to 18, a stationary section 2' is disposed in the periphery (on the outside) of a movable section 3'.

The movable section 3' includes a shaft 31' reciprocated in the axial direction, and an inner core (movable element) 32' as a movable magnetic pole which is disposed around the axis of the shaft 31' and is reciprocated in the axial direction together with the shaft 31'. Incidentally, the axial direction of the shaft 31' and the direction in which the inner core 32' is reciprocated, or the thrust direction, are the same. In the following description, the axial direction of the shaft 31' and the thrust direction are used in the same meaning. In addition, the "front" in the following description means the direction as viewed from either one side of the axial direction of the shaft 31'.

The shaft 31' is tetragonal or roughly tetragonal in outer shape (outer edge shape in cross-section), and is formed with a screw section 311' at one end portion (tip portion) thereof (see FIG. 17). With the screw section 311' is screw-engaged a nut N' for fixing the shaft 31' to an object (not shown) which is to be driven.

The inner core 32' has thin steel sheets (e.g., silicon steel sheets) stacked in the thrust direction and united. In this embodiment, a roughly rectangular inner core 32' formed with notches at its four corners is applied. In addition, the inner core 32' is provided in its central portion with a shaft passing hole 321' penetrating it in the thrust direction. The aperture shape of the shaft passing hole 321' is a tetragonal or roughly tetragonal shape corresponding to the outer shape of the shaft 31' (see FIG. 17). In this embodiment, a plurality of (in the example shown, two) such inner cores 32' are arranged in the axial direction of the shaft 31', through a spacer S' therebetween. Each of those surfaces of the inner core 32' which are each opposed to a permanent magnet 22' in the stationary section 2' to be described below functions as a magnetic pole surface 322', and the magnetic pole surface 322' is set as a flat surface parallel to the permanent magnet 22'.

The stationary section 2' includes: a ring-shaped stator (outer core) 21' circular in outer shape; the permanent magnets 22' secured respectively to tip surfaces of those projected sections 211' of the inner core 21' which are projected inward; a bobbin 23' which has a movable element containing section 231' disposed on the inside of the inner core 21' and capable of containing the inner core 32', and coil winding sections 232'; and a pair of upper and lower coils 24' wound around the coil winding sections 232' and located inside the inner core 21'.

The inner core 21' is provided, at tip surfaces of the projected sections 211', with permanent magnet setting sections 212' where the permanent magnets 22' can be disposed. The permanent magnet setting sections 212' are each composed of a flat surface. On each of the permanent magnet setting sections 212', a plurality of (in the example shown, four) permanent magnets 22' are fixed in the state of being arrayed in the axial direction of the shaft 31'. Incidentally, in this embodiment, the inner core 21' is a roughly hollow cylindrical inner core 21' formed by mutually assembling stator units 21U' obtained by bisecting the inner core 21'; however, a stator which is not bisected may also be used. The inner core 21' is provided, at least at its upper end and lower end portions, with bolt passing holes 21a' penetrating it in the thrust direction.

The permanent magnets 22' are flat plate-like in shape, and are arranged in the state of being juxtaposed in the axial direction of the shaft 31'. Here, each pair of the permanent magnets 22' adjacent to each other in the axial direction of the shaft 31' have different magnetic poles (N pole, S pole). In addition, the arrangement of the magnetic poles on the permanent magnet setting section 211' on one side is set opposite to the arrangement of the magnetic poles on the permanent magnet setting section 212' on the other side. The surfaces of the permanent magnets 22' secured to each permanent magnet setting section 212' which is a flat surface are flush or substantially flush with one another.

The bobbin 23' includes: movable element containing section 231' penetrating in the thrust direction; a pair of upper and lower coil winding sections 232'; and a projected section insertion hole 233' which penetrates in the height direction and in which the projected sections 211' of the inner core 21' can be inserted. Such a setting is adopted that, in the condition where the inner core 32' is contained in the movable element containing section 231' and where the projected sections 211' are inserted in the projected section insertion hole 233', a gap G' extending rectilinearly and having a predetermined size is formed between each magnetic pole surface 322' of the inner core 32' and the permanent magnets 22' provided on the tip surface of each projected section 211' (permanent magnet setting section 212') of the inner core 21', which are opposed to each other.

The coils 24' are wound respectively around the pair of upper and lower coil winding recesses 232' of the bobbin 23', and are so wired that currents flow in an upper portion and a lower portion on the upper and lower sides of the shaft 31'. By switching the flow directions of the currents, the movable section 3' can be reciprocated.

The movable section 3' and the stationary section 2' configured as above are interconnected through a bearing 4'. In this embodiment, the bearing 4' is for interconnecting the stationary section 2' and the movable section 3' coaxially and concentrically and, through its own elastic deformation, for supporting the movable section 3' so that the movable section 3' can be reciprocated relative to the stationary section 2'. The bearing 4' is composed of a plurality of leaf springs 41' stacked together.

As shown in FIGS. 16 to 18, the leaf spring 41' is a thin sheet-like member which integrally has a part overlapping with the inner core 21' through spacers S" and a flange member 5', and a part (flexible part) overlapping with the inner core 32' through a spacer S'. The leaf spring 41' is roughly in the shape of numeral 8 in front view, and is formed by blanking, for example. Of the leaf spring 41', the part overlapping with the inner core 21' through the flange member 5 is provided with bolt passing holes 41a' penetrating it in its thickness direction, whereas the part overlapping with the inner core 32' through the spacer S' is provided with a shaft passing hole 41b' penetrating it in its thickness direction. The shaft passing hole 41b' is capable of communicating with the shaft passing hole 321' formed in the inner core 32'. In this embodiment, the aperture shape of the shaft passing hole 41b' is set to be the same or substantially the same with the aperture shape of the shaft passing hole 321' formed in the inner core 32', namely, to be a tetragonal or roughly tetragonal shape.

The flange member 5' has a ring-like shape for overlapping with the inner core 21', and is provided with bolt passing holes 51' capable of communicating with the bolt passing holes 21a' formed in the inner core 21'.

In the linear actuator 1' configured as above, the shaft 31' in a tetragonal prismatic shape or a roughly tetragonal prismatic shape is passed through the shaft passing holes 41b' formed in the leaf springs 41' in the tetragonal or roughly tetragonal aperture shape corresponding thereto, whereby the shaft 31' is supported so that it cannot be turned about its axis relative to the leaf springs 41'. In addition, the shaft 31' is passed through the shaft passing hole 321' formed in the inner core 32' in the tetragonal or roughly tetragonal shape, whereby the inner core 32' as a whole can be prevented from being inclined (shifted) around the axis of the shaft 31'. Besides, in the condition where the inner core 32' is contained in the movable element containing section 231' of the bobbin 23', the movable section 3' and the stationary section 2' can be positioned relative to each other, while taking as a reference the pair of leaf springs 41' disposed on the front and rear sides of the inner core 21'. Specifically, the stator units 21U' bisected to the upper and lower units are brought closer to each other so as to clamp the bobbin 23' therebetween from the upper and lower sides, and the projected sections 211' of the inner core 21' are inserted into the projected section insertion hole 233' formed in the bobbin 23'. In this condition, the gap G' extending rectilinearly and having a predetermined size is formed between each magnetic pole surface 322' of the inner core 32' and the permanent magnets 22' provided on the tip surface of each projected section 211' (permanent magnet setting section 212') of the inner core 21', which are opposed to each other (see FIG. 18 and 19). In addition, bolts B' are passed through the bolt passing holes 41a' in the leaf springs 41', the spacers S", the bolt passing holes 51' in the flange members 5', and the bolt passing holes 21 a' in the inner core 21', which communicate with one another in the thrust direction, and the tip portions of the bolts B' are fastened to nuts (not shown), whereby the linear actuator 1' is obtained in which the leaf springs 41' and the flange members 5' are integrally assembled. Incidentally, in place of the bolts and the nuts (not shown), rivets may be press fitted into and through the bolt passing holes 41 a' in the leaf springs 41', the spacers S", the bolt passing holes 51' in the flange members 5', and the bolt passing holes 21 a' in the inner core 21', to achieve the assemblage.

In the linear actuator 1' according to this embodiment configured as above, the parallel gap G' extending rectilinearly is formed between the outside surface of the inner core 32' and the inside surface of the inner core 21', namely, between the magnetic pole surface 322' and the surfaces of the permanent magnets 22', which are opposed to each other. In the condition where the coils 24' in the linear actuator 1' are not energized, the shaft 31' is held in a predetermined position relative to the movable section 3 (inner core 32') by magnetic forces generated from the permanent magnets 22'. When the coils 24' are energized, the movable section 3' is reciprocated in the thrust direction, based on the directions of the magnetic fields generated from the permanent magnets 22' and the magnetic fields generated by the currents flowing in the coils 24'.

Thus, in the linear actuator 1' according to this embodiment, the use of the flat plate-like permanent magnet 22' ensures that there is no need for a high machining accuracy, the amount of the permanent magnet 22' used and the amount of waste generated upon the machining are comparatively smaller, and a reduction in cost can be effectively contrived, as compared with the bowlike permanent magnets conventionally used. In addition, the cost of the permanent magnet 22' itself can be reduced, so that a reduction in the total cost of the linear actuator can also be contrived. Particularly, the cost of the permanent magnet 22' accounts for a high proportion of the total cost of the linear actuator 1', and, therefore, a reduction in the cost of the permanent magnet 22' contributes greatly to a reduction in the total cost of the linear actuator 1'.

Further, in this embodiment, the application of the flat plate-like permanent magnet 22' ensures that the bulk (overall height dimension) of the permanent magnet 22' itself can be suppressed to a low value (thin form), as compared with the case where the bowlike permanent magnet 22' is applied. Consequently, the number of turns in the coils 24' can be increased, and a compacter design of the linear actuator 1' itself can be contrived.

The linear actuator 1' in which a reduced cost and a compacter design can thus be realized is excellent in versatility and the degree of freedom of installation, and is favorably applicable also to automobiles accompanied by a keen demand for cost reduction. Preferable application examples of the linear actuator 1' include application to a vibration-damping mechanism for a vehicle body, specifically, application as an actuator for actively moving a weight disposed at an appropriate portion of a vehicle body. In this case, vibrations of the vehicle body can be favorably suppressed by utilizing the reaction force of the mass of the weight, or the movable section 3, vibrated by the linear actuator 1'.

In addition, in the linear actuator 1' according to this embodiment, the shaft 31' and the bearing 4' are so assembled as to be incapable of relative rotation, and movement of the movable section 3' and the stationary section 2' in a plane orthogonal to the axial direction of the shaft 31' is restrained by the bearing 4'. Therefore, the movable section 3' and the stationary section 2' which are relatively positioned by the bearing 4' can be prevented from being inclined (shifted) around the axis of the shaft 31'. As a result, the magnetic pole surface 322' opposed to the flat plate-like permanent magnets 22' can be formed flat. Accordingly, a parallel gap G' can be easily secured between the flat plate-like permanent magnets 22' and the magnetic pole surface 322', without need for a high machining accuracy or a high assembling accuracy and without damaging the permanent magnets 22'.

Incidentally, the present invention is not limited to the above-described embodiments.

For instance, it suffices for the shaft and the bearing to be incapable of relative rotation, and, therefore, the outer shape of the shaft may be set to be other polygonal shape than the tetragonal shape, and the aperture shape of the bearing may be set in a polygonal shape corresponding to the outer shape of the shaft. Further, a shaft the outer shape of which has a straight line portion at a part of the circumference of a circle (e.g., roughly D-shape) may be applied as the shaft, and the aperture shape of the bearing may be set in a shape corresponding to the outer shape of the shaft. Or, the shaft and the bearing can be so assembled as to be incapable of relative rotation, by key engagement (for example, either one of the shaft and the bearing is provided with a projection, which is engaged with a recess provided in the other one).

In addition, the linear actuator may have a configuration wherein either one of the stationary section and the movable section has a plurality of flat plate-like permanent magnets so arranged as to form a partial polygonal shape as viewed in the axial direction of the shaft (front view), and that magnetic pole surface of the other one which is opposed to these permanent magnets is set to be a partial polygonal shape parallel or substantially parallel to the surface of the plurality of permanent magnets, with a gap of a predetermined size therebetween.

Besides, it suffices that the bearing supports the shaft in a non-rotatable manner, positions the stationary section and the movable section relative to each other, and can move in the thrust direction while maintaining the relative positions of the stationary section and the movable section around the axis of the shaft. Thus, other member than the leaf spring may be applied to the bearing, and the material and shape of the bearing are not specifically restricted.

In addition, while a permanent-magnet moving-core type motor, or so-called reciprocating electric motor, has been shown as an example of linear motor in the above-described embodiments, the linear actuator according to the present invention may be applied to a small-stroke linear actuator of other type, such as moving-magnet type, whereon the same effect as above-mentioned can be obtained.

Besides, specific configurations of parts or sections are also not limited to those in the above-described embodiments, and various modifications are possible within the scope of the present invention.

Now, linear actuators according to still other embodiments of the present invention will be described below, based on the drawings. First, one embodiment of the invention will be described, based on FIGS. 20 to 24.

FIG. 20 is an exploded perspective view of a linear actuator, FIG. 21 is a front view of a leaf spring, FIG. 22 is a perspective view, as viewed from the front side, of the completed linear actuator, FIG. 23 is a perspective view, as viewed from the rear side, of the completed linear actuator, and FIG. 24 is a front view of FIG. 22. Incidentally, for convenience, the left side in FIG. 20 will be referred to as the front side, and the right side as the rear side.

As shown in these figures, the linear actuator 1 according to this embodiment includes a stator 2, a movable element 3, and leaf springs 41, 42. The stator 2 is disposed inside the movable element 3. In addition, the movable element 3 is so supported that it can be reciprocated in the front-rear direction (thrust direction) relative to the stator 2.

The stator 2 has a bobbin 200 with an inner core (not shown) inserted therein, permanent magnets 23, 23, and a shaft 25. The bobbin 200 is formed by mutually combining bisected left and right bobbin units 200A, 200A, so as to cover the inner core. In addition, the bobbin 200 is provided at its one end portion and the other end portion with coil winding sections where coils 201A, 201B are wound. Further, both end surfaces of the bobbin 200 are each formed in a circular arc-like shape protuberant to the radially outer side. The permanent magnets 23, 23 are constituted of a first permanent magnet 23 and a second permanent magnet 23, which are secured respectively to both end surfaces of the inner core. Besides, an outer surface and an inner surface of each of the permanent magnets 23, 23 are each formed in a circular arc-like shape protuberant to the radially outer side.

The shaft 25 is provided at its front portion with an enlarged section 231a by enlarging the front portion in comparison to an intermediate portion in the axial direction, and is provided at its rear portion with a male screw section 232 which is smaller in diameter than the enlarged section 231a. The shaft 25 is passed through a through-hole (not shown) formed in a central portion of the bobbin 200, starting from the male screw section 232. A front spacer S equal in diameter to the enlarged section 231a is inserted between the enlarged section 231a and the front surface of the bobbin 200. On the other hand, rear spacers S, S equal in diameter to the enlarged section 231a are inserted between the male screw section 232 and the rear surface of the bobbin 200. Further, a nut N is screw-engaged with the male screw section 232 of the shaft 25, through the rear spacers S, S and a washer W therebetween.

The movable element 3 has a hollow prismatic outer core 31 and flange members 5, 5. The outer core 31 is a stacked body in which silicon steel sheets as exemplary magnetic material are closely stacked together in the front-rear direction (the axial direction of the shaft 25). An inner surface of the outer core 31 is integrally provided, on one end side thereof, with a first magnetic pole section (upper opposite section) 301 which is bulged toward the other end side. In addition, the inner surface of the outer core 31 is integrally provided, on the other end side thereof, with a second magnetic pole section (lower opposite section) 302 which is bulged toward the one end side.

An opposed surface of the first magnetic pole section 301 is disposed opposite to an outer surface of the first permanent magnet 23, through a gap C1 of a predetermined with δ1 in the radial direction therebetween (see FIG. 24). The radial direction in this case is the radial direction having a starting point at the center P1 of the bobbin 200. On the other hand, an opposed surface of the second magnetic pole section 302 is disposed opposite to an outer surface of the second permanent magnet 22, through a gap C2 of a predetermined width δ2 in the radial direction therebetween (see FIG. 24). The radial direction in this case is the radial direction having a starting point at the center P1 of the bobbin 200. The width δ1 in the radial direction of the gap C1 and the width δ2 in the radial direction of the gap C2 are set equal.

At a front surface and a rear surface of one end portion of the outer core 31 and at a front surface and a rear surface of the other end portion of the outer core 31, holding shaft bodies 303, 304 as the engaging projections according to the present invention are provided at central portions in the width direction in the state of projecting in the front-rear direction. Specifically, the one end portion and the other end portion of the outer core 31 are provided, in the central portions in the width direction thereof, with through-holes along the front-rear direction. A first holding shaft body 303 is passed through the through-hole in the one end portion, and a second holding shaft body 304 is passed through the through-hole in the other end portion. The holding shaft bodies 303, 304 are formed to have a length greater than the thickness in the front-rear direction of the outer core 31. Therefore, end portions of the holding bodies 303, 304 protrude, in the front-rear direction, from the central portions in the width direction of the front and rear surfaces of the one end portion and the front and rear surfaces of the other end portion, of the outer core 31.

In addition, the flange member 5 on the front side is stacked over the outer core 31 from the front side, through the leaf spring 41 therebetween. On the other hand, the flange member 5 on the rear side is stacked over the outer core 31 from the rear side, through the leaf spring 42 therebetween. The flange members 5, 5 are provided with stoppers 58, 59 projecting from both left and right sides toward the center in the width direction. The stoppers 58, 59 are for preventing the stator 2 (or inner core) from being dislodged from the outer core 31 when the outer core 31 is reciprocated. Besides, the flange members 5, 5 are formed in a rectangular frame-like shape in front view, and are provided with projected sections 58A, 59A at one end portion and other end portion thereof. Incidentally, inner surfaces of the projected sections 58A, 59A are provided with recesses for accepting end portions of the holding shaft bodies 303, 304.

The leaf spring 41 on the front side is interposed between the outer core 31 and the flange member 5 on the front side. On the other hand, the leaf spring 42 on the rear side is interposed between the outer core 31 and the flange member 5 on the rear side. In addition, the leaf springs 41, 42 are formed by blanking from a metallic sheet having a uniform thickness. As shown in FIG. 2, the leaf springs 41, 42 each have, integrally formed, a frame section 411, 412 to be laid on the outer core 31, and a flexible section 412, 422 provided on the inner side of the frame section 411, 412.

Of the component sections of the leaf spring 41, 42, the frame section 411, 421 is clamped between the flange member 5, 5 and the outer core 31 in the front-rear direction. The frame section 411, 421 is provided with bolt passing holes 411 a, 421a in the four corners thereof. Upper and lower parts of the frame sections 411, 421 are formed at central portions in the width direction thereof with an upper opening 411b, 421b and a lower opening 411c, 421c in a U shape, through which end portions of the holding shaft bodies 303, 304 are to be passed.

The flexible section 412, 422 is formed in the shape of numeral "8" in front view. In a central part 4121, 4221 corresponding to the intersection of central lines of numeral "8," there is formed a shaft passing hole 412a, 422a through which an intermediate portion of the shaft 25 is to be passed. Besides, in the parts corresponding to the inside of rings of numeral "8," there are formed insertion openings 4122, 4222 large enough to pass the coil winding sections of the bobbin 200 through the inside thereof.

The central part 4121 of the leaf spring 41 on the front side is clamped between the enlarged section 231a and a front sleeve S. On the other hand, the central part 4221 of the leaf spring 42 on the rear side is clamped between a pair of rear sleeves S, S.

Bolts B are passed in the front-rear direction through the four corners (through the passing holes formed there) of the movable element 3, and nuts N are fastened to the tips of the bolts B, whereby the outer core 31, the leaf springs 41, 42, and the flange members 5, 5 are united together.

Now, the flexible section 412, 422 will be described in detail referring to FIG. 21. While securing flexibility, the flexible section 412, 422 must be so formed that strength is secured at the parts of the upper opening 411b, 421b, the lower opening 411c, 421c, the bolt passing holes 411a, 421a, and the shaft passing hole 412a, 422a thereof. Specifically, as above-mentioned, the leaf spring 41, 42 is in the shape of numeral "8," and has the insertion openings (annular parts) 4122, 4222 in upper and lower portions thereof. The insertion openings (annular parts) 4122, 4222 are, for example, are smaller in the vertical size and larger in the left-right size so that the leaf spring 41, 42 as a whole is easily flexible. As viewed from the front side, the insertion openings 4122, 4222 are each in a rounded barrel-like shape.

In addition, the flexible section 412, 422 has its terminal parts located near the upper opening 411b, 421b and the lower opening 411c, 421c; besides, the parts near the upper opening 411b, 421b and the lower opening 411c, 421c are formed to be broader so as to extend toward the upper opening 411b, 421b and the lower opening 411c, 421c. This is for reinforcing the parts near the upper opening 411b, 421b and the lower opening 411c, 421c, in view of the fact that the flexible section 412, 422 is destined to be flexed in the front-rear direction with these parts as a fulcrum.

Besides, the part of the shaft passing hole 412a, 422a of the leaf spring 41, 42 through which the shaft 25 is to be passes is a part which is most greatly displaced attendant on the reciprocation of the movable element 3. In this part, therefore, constrictions 4121b, 4221b circular arc-shaped toward the center are formed on both left and right sides. However, strength of this part against reciprocation is secured by, for example, enlarging as much as possible the surface area of the circumferential edge portion of the shaft passing hole 412a, 422a.

In the linear actuator 1 configured as above, in the condition where the coils 201A, 201B are not energized, the shaft 25 is held in a predetermined position relative to the movable element 3 (outer core 31) by magnetic forces generated from the permanent magnets 23, 23. When the coils 201A, 201B are energized, the movable element 3 is reciprocated in the front-rear direction along the shaft 25, based on the directions of the magnetic fields generated from the permanent magnets 23, 23 and the magnetic fields generated by the currents flowing in the coils 201A, 201B.

Now, assemblage of the linear actuator 1 configured as above will be described below. First, a core-completed assembly K is prepared in which the bobbin 200 is mounted to the inner core with the permanent magnets 23, 23 secured thereto and the coils 201A, 201B are wound on the bobbin 200.

Next, the front sleeve S and the leaf spring 41 are preliminarily disposed on the front side of the core-completed assembly K. Then, the male screw section 232 of the shaft 25 is inserted into and through the through-hole in the bobbin 200 from the front side toward the rear side, by way of the leaf spring 41 and the front sleeve S.

If the bobbin 200 is located in the inside of the outer core under this condition, either of the first and second magnetic pole sections 301, 302 of the outer core 31 would be magnetically attracted to either of the first and second permanent magnets 23, 23 of the bobbin 200. In view of this, the upper opening 411b and the lower opening 411c of the leaf spring 41 are hooked on the holding shaft bodies 303, 304 of the outer core 31, and thereafter the flange members 5, 5 are matched to the front-side end face of the outer core 31 while inserting the holding shaft bodies 303, 304 into the pair of recesses formed in both end portions of the inner surface of the flange member 5.

Subsequently, the rear sleeve S, the leaf spring 42, and the rear sleeve S are disposed on the shaft 25 passed through the through-hole in the bobbin 200. Then, the upper opening (corresponding to the notch) 421b and the lower opening 421c of the leaf spring 42 are hooked on the holding shaft bodies 303, 304 of the outer core 31. Thereafter, while inserting the holding shaft bodies 303, 304 into the pair of recesses formed in both end portions of the inner surface of the flange member 5, the flange member 5 is matched to the rear-side end face of the outer core 31, and the bolts B are passed through the front and rear flange members 5, 5 and bold passing holes 411 a, 421 a of the leaf springs 41, 42. Finally, the bolts B and the nuts N are tightened to each other, and the nut N is screw-engaged with the male screw section 232 of the shaft 25.

In this instance, the shaft 25 is supported horizontally by the front and rear leaf springs 41, 42, so that the predetermined gaps C1, C2 are reliably maintained between the magnetic pole sections 301, 302 of the outer core 31 and the permanent magnets 23, 23 of the bobbin 200, respectively. Besides, the permanent magnets would not be damaged in this process.

Incidentally, the linear actuator according to the present invention is not limited to the above-described embodiments, and various modifications are possible without departure from the scope of the invention.

For instance, while the leaf springs each having the frame section 411, 421 and the flexible section 412, 422 have been used in the above-described embodiments, leaf springs 41', 42' each having only a flexible section 412, 422 and not having a frame section 411, 421 as shown in FIG. 25 may also be used.

In addition, while the holding shaft bodies 303, 304 have been formed to be located on a vertically extending center line in the above-described embodiments, this layout is not limitative. For example, the holding shaft bodies may be formed at positions deviated from the center line, or may be formed on a diagonal. Besides, the upper opening and the lower opening, or notches, in which the holding shaft bodies 303, 304 are to be engaged may not necessarily be provided in a pair. Specifically, one of the upper and lower openings may be a circular opening (an engaging cutout lacking a notch) and the other may be a notch. Further, the notch may be V-shaped or elliptic in shape.

In addition, while an outer movable type linear actuator has been described in the above embodiments, the linear actuator according to the present invention may be of the inner movable type. In that case, the configuration of the stator and the movable element will be reversed, as compared with the foregoing.

### Explanation of Reference Symbols

1, 1' ... Linear actuator, 2, 2' ... Stator (Stationary section), 3, 3' ... Movable element (Movable section), 5A, 5B ... Outer-side projection, 21A, 21B ... Inner-side projection, 20 ... Inner core, 21, 22, 22', 23 ... Permanent magnet, 24, 24' ... Coil, 25, 31' ... Shaft, 30 ... Outer core, 31, 32 ... Flange member, 301, 302 ... Magnetic pole section, 303, 304 ... Holding shaft body (Engaging projection), 311, 322 ... Magnetic pole surface, 4, 4' ... Bearing (Leaf spring), 41, 41', 42 ... Leaf spring (Bearing), 411, 421 ... Frame section, 412, 422 ... Flexible section, 412a, 41b' ... Shaft passing hole, 411b, 421b ... Notch (Engaging cutout), 50, 51 ... Outer-side upper projected section, 52, 53 ... Outer-side lower projected section, 60, 61 ... Inner-side projection, 70, 71 ... Inner-side upper projected section, 72, 73 ... Inner-side lower projected section, 80, 81 ... Outer-side projection, 331, 341 ... Main body section, 332, 342 ... Projected section, C1, C2 ... Gap, C3, C4 ... Annular gap.

## Claims

1. A linear actuator (1) comprising a stator (2) and a movable element (3) which are disposed on radially inner and outer sides, a permanent magnet (23) provided in one of the stator (2) and the movable element (3), a magnetic pole section (301,302) which is provided in the other of the stator (2) and the movable element (3) and is disposed opposite to the permanent magnet (23) in a radial direction through a predetermined gap (C1,C2) therebetween, and a leaf spring (41,42) which supports the stator (2) and the movable element (3) so as to cause them to have the same axis and which elastically supports the movable element (3) so that the movable element (3) can be reciprocated relative to the stator (2) in an axial direction,
the linear actuator (1) including a first contact section (3322a,3422a,54-57,312,313,80,81) provided in one of the stator (2) and the movable element (3), and
a second contact section (231b,26a,60,61,70-73,210a,211a) which is provided in the other of the stator (2) and the movable element (3) and which is provided at such a position as to be able to make contact with the first contact section (3322a,3422a,54-57,312,313,80,81) in the radial direction or in a rotating direction about the axis, **characterized in that**
the width of a gap ( δ 3- δ 16) between the first contact section (3322a,3422a,54-57,312,313,80,81) and the second contact section (231b,26a,60,61,70-73,210a,211a) in the radial direction or the width of a gap between the first contact section (3422a,54-57,312,313,80,81) and the second contact section (231b,26a,60,61,70-73,210a,211a) in the rotating direction is smaller than the width of the gap ( δ 1, δ 2) between the permanent magnet (23) and the magnetic pole section (301,302), such that the first contact section (3322a,3422a,54-57,312,313,80,81) and the second contact section (231b,26a,60,61,70-73,210a,211a) make contact with each other before the permanent magnet (23) and the magnetic pole section (301,302) make contact with each other.

2. The linear actuator according to claim 1,
wherein the first contact section is provided at at least a portion thereof with at least one first projection projecting (54-57,80,81) toward the second contact section, and
the second contact section is provided at at least a portion thereof with at least one second projection projecting (60,61,70-73) toward the first contact section.

3. The linear actuator according to claim 1,
wherein the first contact section is provided at at least a portion (21,31) thereof with at least one projection (70-73,80,81) projecting toward the second contact section, and
the second contact section is provided at at least a portion (31,21) thereof with at least one recess capable of containing the first contact section.

4. The linear actuator according to claim 1,
wherein the first contact section is a shaft (25) passed through that one of the stator (2) and the movable element (3) which is disposed on the radially inner side, with the axis as a common axis,
the second contact section is a flange (53) provided in that other of the stator (2) and the movable element (3) which is disposed on the radially outer side, the flange (53) having a hole (3322,3422) through which an end side of the shaft (25) is passed, and
the width of a radial gap ( δ 3, δ 4) between the first contact section (25) and the second contact section (53) is smaller than the width of the gap ( δ 1, δ 2) between the permanent magnet (23) and the magnetic pole section (301,302).

## Patentansprüche

1. Linearaktuator (1), der Folgendes umfasst: einen Stator (2) und ein bewegliches Element (3), die auf radial inneren und äußeren Seiten angeordnet sind, einen Dauermagneten (23), der in einem des Stators (2) und des beweglichen Elements (3) angeordnet ist, eine Magnetpolsektion (301, 302), die in an dem anderen des Stators (2) und des beweglichen Elements (3) angeordnet ist und gegenüber dem Dauermagneten (23) in einer radialen Richtung mit einem vorgegebenen Spalt (Cl, C2) dazwischen angeordnet ist, und eine Blattfeder (41, 42), die den Stator (2) und das bewegliche Element (3) so stützt, dass sie dieselbe Achse haben, und die das bewegliche Element (3) elastisch so stützt, dass das bewegliche Element (3) relativ zu dem Stator (2) in einer axialen Richtung hin und her bewegt werden kann,
wobei der Linearaktuator (1) eine erste Kontaktsektion (3322a, 3422a, 54-57, 312, 313, 80, 81) umfasst, die in einem des Stators (2) und des beweglichen Elements (3) angeordnet ist, und eine zweite Kontaktsektion (231b, 26a, 60, 61, 70-73, 210a, 211a) umfasst, die in dem anderen des Stators (2) und des beweglichen Elements (3) angeordnet ist, und die an einer derartigen Position angeordnet ist, dass sie einen Kontakt mit der ersten Kontaktsektion (3322a, 3422a, 54-57, 312, 313, 80, 81) in der radialen Richtung oder in einer Drehrichtung um die Achse herum herstellen kann,
**dadurch gekennzeichnet, dass**
die Breite eines Spalts (δ 3 - δ 16) zwischen der ersten Kontaktsektion (3322a, 3422a, 54-57, 312, 313, 80, 81) und der zweiten Kontaktsektion (231b, 26a, 60, 61, 70-73, 210a, 211a) in der radialen Richtung oder die Breite eines Spalts zwischen der ersten Kontaktsektion (3422a, 54-57, 312, 313, 80, 81) und der zweiten Kontaktsektion (231b, 26a, 60, 61, 70-73, 210a, 211a) in der Drehrichtung kleiner ist als die Breite des Spalts (δ 1, δ 2) zwischen dem Dauermagneten (23) und der Magnetpolsektion (301, 302), so dass die erste Kontaktsektion (3322a, 3422a, 54-57, 312, 313, 80, 81) und die zweite Kontaktsektion (231b, 26a, 60, 61, 70-73, 210a, 211a) einen Kontakt miteinander herstellen, bevor der Dauermagnet (23) und die Magnetpolsektion (301, 302) einen Kontakt miteinander herstellen.

2. Linearaktuator nach Anspruch 1,
wobei die erste Kontaktsektion an mindestens einem Abschnitt des Linearaktuators mit mindestens einem ersten Vorsprung (54-57, 80, 81) angeordnet ist, der in Richtung der zweiten Kontaktsektion vorspringt, und
die zweite Kontaktsektion an mindestens einem Abschnitt des Linearaktuators mit mindestens einem zweiten Vorsprung (60, 61, 70-73) angeordnet ist, der in Richtung der ersten Kontaktsektion vorspringt.

3. Linearaktuator nach Anspruch 1,
wobei die erste Kontaktsektion an mindestens einem Abschnitt (21, 31) des Linearaktuators mit mindestens einem Vorsprung (70-73, 80, 81) angeordnet ist, der in Richtung der zweiten Kontaktsektion vorspringt, und die zweite Kontaktsektion an mindestens einem Abschnitt (31, 21) des Linearaktuators mit mindestens einer Aussparung angeordnet ist, die dazu eingerichtet ist, die erste Kontaktsektion aufzunehmen.

4. Linearaktuator nach Anspruch 1,
wobei die erste Kontaktsektion ein Schaft (25) ist, der durch jenen des Stators (2) und des beweglichen Elements (3) hindurch führt, der auf der radial inneren Seite angeordnet ist, wobei die Achse eine gemeinsame Achse ist, die zweite Kontaktsektion ein Flansch (53) ist, der in jenem anderen des Stators (2) und des beweglichen Elements (3) angeordnet ist, das auf der radial äußeren Seite angeordnet ist, wobei der Flansch (53) ein Loch (3322, 3422) aufweist, durch das eine Endseite des Schaftes (25) hindurch geführt wird, und
die Breite eines radialen Spalts (δ 3, δ 4) zwischen der ersten Kontaktsektion (25) und der zweiten Kontaktsektion (53) kleiner ist als die Breite des Spalts (δ 1, δ 2) zwischen dem Dauermagneten (23) und der Magnetpolsektion (301, 302).

## Revendications

1. Actionneur linéaire (1) comprenant un stator (2) et un élément mobile (3) qui sont disposés sur des côtés radialement intérieur et extérieur, un aimant permanent (23) prévu dans l'un du stator (2) et de l'élément mobile (3), une section de pôle magnétique (301, 302) qui est prévue dans l'autre du stator (2) et de l'élément mobile (3) et est disposée à l'opposé de l'aimant permanent (23) dans une direction radiale par l'intermédiaire d'un espace prédéterminé (C1, C2) entre eux, et un ressort à lames (41, 42) qui supporte le stator (2) et l'élément mobile (3) de manière à les amener à avoir le même axe et qui supporte de façon élastique l'élément mobile (3) de telle sorte que l'élément mobile (3) peut être déplacé en va-et-vient par rapport au stator (2) dans une direction axiale, l'actionneur linéaire (1) comprenant une première section de contact (3322a, 3422a, 54-57, 312, 313, 80, 81) prévue dans l'un du stator (2) et de l'élément mobile (3), et une seconde section de contact (231b, 26a, 60, 61, 70-73, 210a, 211a) qui est prévue dans l'autre du stator (2) et de l'élément mobile (3) et qui est prévue dans une position qui lui permet de venir en contact avec la première section de contact (3322a, 3422a, 54-57, 312, 313, 80, 81) dans la direction radiale ou dans une direction de rotation autour de l'axe,
**caractérisé en ce que**
la largeur d'un espace (δ 3- δ 16) entre la première section de contact (3322a, 3422a, 54-57, 312, 313, 80,81) et la seconde section de contact (231b, 26a, 60, 61, 70-73, 210a, 211a) dans la direction radiale ou la largeur d'un espace entre la première section de contact (3422a, 54-57, 312, 313, 80, 81) et la seconde section de contact (231b, 26a, 60, 61, 70-73, 210a, 211a) dans la direction de rotation est inférieure à la largeur de l'espace (δ 1, δ 2) entre l'aimant permanent (23) et la section de pôle magnétique (301, 302), de sorte que la première section de contact (3322a, 3422a, 54-57, 312, 313, 80, 81) et la seconde section de contact (231b, 26a, 60, 61, 70-73, 210a, 211a) entrent en contact l'une avec l'autre avant que l'aimant permanent (23) et la section de pôle magnétique (301, 302) n'entrent en contact l'un avec l'autre.

2. Actionneur linéaire selon la revendication 1,
dans lequel la première section de contact est pourvue, sur au moins d'une partie de celle-ci, d'au moins une première saillie (54-57, 80, 81) faisant saillie vers la seconde section de contact, et
la seconde section de contact est pourvue, sur au moins d'une partie de celle-ci, d'au moins une seconde saillie (60, 61, 70-73) faisant saillie vers la première section de contact.

3. Actionneur linéaire selon la revendication 1,
dans lequel la première section de contact est pourvue, sur au moins une partie (21, 31) de celle-ci, d'au moins une saillie (70-73, 80, 81) faisant saillie vers la seconde section de contact, et
la seconde section de contact est pourvue, sur au moins une partie (31, 21) de celle-ci, d'au moins un évidement capable de contenir la première section de contact.

4. Actionneur linéaire selon la revendication 1,
dans lequel la première section de contact est un arbre (25) passé à travers celui du stator (2) et de l'élément mobile (3) qui est disposé sur le côté radialement intérieur, avec l'axe comme axe commun,
la seconde section de contact est une bride (53) prévue dans l'autre du stator (2) et de l'élément mobile (3) qui est disposé sur le côté radialement extérieur, la bride (53) ayant un trou (3322, 3422) à travers lequel un côté d'extrémité de l'arbre (25) est passé, et
la largeur d'un espace radial (δ 3, δ 4) entre la première section de contact (25) et la seconde section de contact (53) est inférieure à la largeur de l'espace (δ 1, δ 2) entre l'aimant permanent (23) et la section de pôle magnétique (301, 302).
